# EUROPEAN PATENT SPECIFICATION

(11) **EP 2 700 495 B1**
(45) Date of publication and mention of the grant of the patent: **03.08.2016**
(21) Application number: 13186034.8
(22) Date of filing: 16.12.2004
(51) Int. Cl.: B29D 30/00, B29D 30/20

(54) **METHOD AND PLANT FOR MANUFACTURING TYRES FOR VEHICLE WHEELS**
VERFAHREN UND ANLAGE ZUR HERSTELLUNG VON REIFEN FÜR FAHRZEUGRÄDER
PROCÉDÉ ET INSTALLATION POUR PRODUIRE DES PNEUS POUR ROUES DE VÉHICULES

(43) Date of publication of application: 26.02.2014
(62) Divisional of application: 04806865.4
(73) Proprietor: Pirelli Tyre S.p.A., 20126 Milano (IT)
(72) Inventor: Mancini, Gianni, I-20126 MILANO (IT)
(74) Representative: Bottero, Claudio

(56) References cited:
- EP-A2- 1 481 791
- JP-A- 2000 351 164
- US-A- 3 223 573
- US-A- 4 805 872
- US-A- 6 139 668
- US-A1- 2001 002 608

## Description

### Background of the invention

The present invention relates to a method for manufacturing tyres for vehicle wheels.

The invention also pertains to a plant for manufacturing vehicle tyres, which may be employed to carry out the above mentioned manufacturing method, as well as to a plant for making tyres for vehicle wheels.

### Prior art

A tyre for vehicle wheels generally comprises a carcass structure including at least one carcass ply having respectively opposite end flaps turned up loop-wise around annular anchoring structures, each of said anchoring structures being usually made up of a substantially circumferential annular insert onto which at least one filling insert is applied, at a radially external position thereof.

A belt structure comprising one or more belt layers, having textile or metallic reinforcing cords arranged at radial superposed relationship with each other and with the carcass structure, is associated to the latter. A tread band, made of elastomeric material like other semifinished products which constitute the tyre, is applied to the belt structure at a radially external position thereof.

Within the framework of the present description and in the following claims, the term "elastomeric material" is used to indicate a composition comprising at least one elastomeric polymer and at least one reinforcing filler. Preferably, such composition further comprises additives such as, for example, a cross-linking agent and/or a plasticizer. Thanks to the presence of the cross-linking agent, such material can be cross-linked by heating, so as to form the end product.

In addition respective sidewalls of elastomeric material are also applied to the side surfaces of the carcass structure, each of them extending from one of the side edges of the tread band up to the respective annular anchoring structure at the beads, which sidewalls, depending on the different embodiments, can exhibit respective radially outer end edges either superposed on the side edges of the tread band so as to form a design scheme of the type usually referred to as "overlying sidewalls", or interposed between the carcass structure and the side edges of the tread band itself, in accordance with a design scheme of the type referred to as "underlying sidewalls".

In most of the conventional processes for tyre manufacture, it is provided that the carcass structure and the belt structure together with the respective tread band are made separately of each other in respective work stations, so as to be mutually assembled at a later time.

More particularly, the building of the carcass structure is carried out in a building station, and it first contemplates the deposition of the carcass ply or plies on a first drum usually identified as "building drum" to form a substantially cylindrical sleeve. The annular anchoring structures at the beads are fitted or formed on the opposite end flaps of the carcass ply or plies which in turn are turned up around the annular structures themselves so as to enclose them in a sort of loop.

Simultaneously, in a finishing station provided with a second drum or auxiliary drum, an outer sleeve is manufactured, which is substantially cylindrical as well, which comprises the belt layers laid down in radially superposed relationship with each other, and the tread band applied to the belt layers at a radially outer position thereof.

The outer sleeve is then picked up from the auxiliary drum to be coupled with the carcass sleeve. To this end, the outer sleeve is arranged in coaxial relation around the carcass sleeve, and then the carcass ply or plies are shaped into a toroidal conformation by axially moving the beads close to each other and simultaneously admitting fluid under pressure into the carcass sleeve, so as to determine the application of the belt/tread band sleeve to the carcass structure of the tyre at a radially outer position thereof.

Assembling of the carcass sleeve with the outer sleeve can be carried out on the same drum used for building the carcass sleeve, in which case reference is made to a "unistage manufacturing process". A manufacturing process of this type is described in document US 3,990, 931, for example.

Alternatively, assembling may be carried out on a so-called "shaping drum" onto which the carcass sleeve and outer sleeve are transferred, to manufacture the tyre according to a so-called "two-stage manufacturing process", as described in document EP 0 613 757, for example.

In conventional manufacturing methods the tread band is usually made of a continuously-extruded section member that, after being cooled for stabilisation of its geometrical conformation, is stored on suitable benches or reels. The semifinished product in the form of sections or of a continuous strip is then sent to a delivering unit which either picks up the sections or cuts the continuous strip into sections of predetermined length, each section constituting the tread band to be circumferential ly applied onto the belt structure of a tyre being manufactured.

In order to increase the characteristics of resistance to radial stresses which the finished tyre is subject to during use, such as for example the stresses caused by the centrifugal force at high speed, it has been proposed to provide the belt structure with at least one radially outer layer including reinforcing cords substantially parallel to the circumferential development direction of the tyre.

These reinforcing cords, usually called "zero-degree cords" are applied on the underlying belt layers - generally provided with textile or metallic reinforcing cords with crossed orientation - by circumferentially winding thereon, according to coils axially arranged side by side, a strip-like element of green elastomeric material including one or more reinforcing cords substantially parallel to one another.

From the production point of view, however, this improvement of the overall mechanical characteristics of the tyre implies a difficult problem, that is, reconciling productivity (meaning the number of pieces that can be manufactured in a unit of time) of the carcass structure building station - which is normally high - with the productivity of the finishing station where the substantially cylindrical sleeve comprising the belt layers and the tread band is manufactured.

In fact, the productivity of the finishing station is highly affected in this case by the inherent slowness of the coil winding step of the strip-like element including the circumferentially oriented reinforcing cords.

In order to somehow obviate this drawback, US patent 4,985,100 suggested to increase the productivity of the finishing station by using a building apparatus rotatable about a substantially vertical rotation axis and provided with two drums symmetrically arranged with respect to the rotation axis of the apparatus and by carrying out the manufacture of the aforementioned substantially cylindrical sleeve by cyclically repeating the steps of:
i) applying a radially inner layer of the belt structure on a first drum of the finishing station at a first working position,
ii) manufacturing a radially outer layer of the belt structure at a second working position by circumferentially winding according to coils axially arranged side by side a strip-like element of elastomeric material including one or more reinforcing cords on a radially inner layer previously made on a second drum of the finishing station;
iii) changing the position of the two drums;
iv) applying at the first working position a tread band on the radially outer layer of the belt structure including the circumferentially oriented reinforcing cords by winding a section of a given length of a continuous strip of elastomeric material preformed in advance;
v) removing the substantially cylindrical sleeve thus obtained from the first working position;
wherein the step ii) of manufacturing the radially outer layer of the belt structure including the circumferentially oriented cords is carried out during the remaining steps iv), v) of manufacturing the tread band and of removing the cylindrical sleeve thus obtained and i) of manufacturing the radially inner layer of the belt structure of a new cylindrical sleeve.

In recent times and in order to further improve the mechanical characteristics and the quality of the tyre, it has been proposed to realise the tread band by winding a continuous elongated element according to coils arranged side by side directly on the belt structure rather than by winding and cutting to size sections of a continuous strip extruded in advance and stored on benches or in reels.

From the practical point of view, this can be obtained - as described for example in International patent application WO 2004/041521 in the name of the same Applicant - by an assembling process comprising the steps of:
i) arranging a belt structure comprising at least one belt layer on an auxiliary drum;
ii) applying a tread band on the belt structure by winding thereon at least one continuous elongated element of elastomeric material according to contiguous circumferential coils;
iii) picking up the belt structure from the auxiliary drum to transfer the same to a position coaxially centred with respect to the carcass sleeve.

Such continuous elongated element is obtained *in situ* and forms a plurality of coils the orientation and mutual-overlapping parameters of which are suitably managed so as to control the variations in thickness to be given to the tread band during the manufacture, based on a predetermined deposition scheme preset on an electronic computer, with a considerable increase of the quality characteristics of the tread band, which in turn positively influence the tyre performance and life.

From the production point of view, however, the achievement of these improvements increases the problem of reconciling the productivity of the building station of the carcass structure with the productivity of the finishing station where the substantially cylindrical sleeve comprising the belt layers and the tread band is manufactured, in particular if the belt structure includes a layer of circumferentially oriented reinforcing cords.

The manufacturing processes suggested by US patent 4,985,100 and by International patent application WO 2004/041521, on the other hand, cannot obtain a sleeve wherein the belt structure includes a layer of circumferentially oriented reinforcing cords and wherein the tread band is made by coil winding of a continuous elongated element of elastomeric material in a cycle time compatible with that of the building station of the carcass structure.

EP 1 481 791 discloses a method of simultaneously producing production runs of tires on a multi-station sequential tire manufacturing system, the tires being from a group of tire types of different build specifications in lot sizes of one or more tires. The steps include: scheduling the production run by imputing tire build software; calculating the corresponding number of cycles each piece of building equipment must perform to build a given lot; and automatically changing to a second build specification at a lot change by switching to the second build specification after the last tire of the first build specification passes; repeating the automated changing to the next build specification at each station as each last tire of each prior lot passes until a final lot is produced. The multi-station sequential tire manufacturing system has at least four stations for carcass building, each station being spaced at a predetermined distance and preferably a multistation tread belt assembly line having workstations separate from the carcass building line, wherein the carcass and the tread belt assemblies are joined in a segmented self-locking mold.

US 6 139 668 discloses a tire assembly method and apparatus which utilize at least two rotatable turrets that each have two drums and at least one transfer unit for transferring tire components from one turret to another. In a preferred embodiment, the tire assembly apparatus comprises three turrets and two transfer units, wherein a carcass band is assembled on the drums of a first turret, the tread package is assembled on a third turret, and the complete tire carcass is assembled on a second turret, in between the first and third turrets. According to this reference, simultaneous, continuous and sequential building and assembly of tire carcass bands and tread packages for a plurality of tires is provided.

JP 2000-351164 discloses an apparatus and method for building a tire wherein in order to reduce worker's load while enhancing productivity, the apparatus comprises a band drum reciprocally movable in its axial direction, a shaping drum reciprocally movable in its axial direction and a belt molding machine having two belt drums arranged symmetrically with respect to a vertical rotation axis, the two belt drums being intermittently revolved around the vertical rotation axis by 180° to be successively moved to first and second molding positions to form a belt molded object. The belt drum at the second molding position and the shaping drum are opposed to each other to be arranged on a first axis and the band drum is arranged on a second axis parallel to the first axis.

US 4 805 872 discloses a means and method for the final shaping of a tire and, more particularly, a turret means having a plurality of bladderless shaping drums which are adapted to receive a green tire carcass and a tread assembly in order to combine the two components. Means for providing the final shaping of the tire are also disclosed. According to this reference, the drive and control means for the bladderless shaping drums mounted upon the rotating upper structure of the turret are controlled by means requiring a minimum number of slip type connections from the fixed lower structure of the turret.

US 3 223 573 discloses an apparatus for applying unvulcanized rubber material to a tire body employing a rotatable turret assembly, the turret carrying a rotatable mandrel which supports the tire carcass, or body, during application of the rubber material thereto and with a calender provided adjacent the turret assembly for each rubber stock to be applied to the tire carcass.

Another tire forming system is disclosed in US 2001/0002608.

### Problem underlying the invention

The Applicant intends to solve the problem of manufacturing a high quality tyre reconciling the different productivity rates of the building station of the carcass structure and of the finishing station intended to manufacture the substantially cylindrical belt structure/tread band sleeve also in the event that such sleeve includes a belt structure provided with a layer of zero-degree reinforcing cords and a tread band made by winding coils of at least one continuous elongated element.

### Summary of the invention

According to the present invention, the Applicant realized the possibility of achieving great improvements in terms of production flexibility and quality of the product by carrying out, in the present tyre manufacturing processes which provide for the assembly of semifinished products, a specific sequence of cyclically repeated steps carried out at least in part simultaneously in a finishing station by supporting the various semifinished products being manufactured on at least two auxiliary drums and operating in at least two different working positions.

More particularly, the present invention relates, according to a first aspect thereof, to a method for manufacturing tyres for vehicle wheels as defined in attached claim 1.

Preferred features of the manufacturing method according to the invention are defined in the following items.
2. Preferably, the aforementioned step b) of manufacturing the substantially cylindrical sleeve is carried out by means of the steps of:
   b1) assembling at a first working position a first belt structure on said first auxiliary drum of the finishing station;
   b2) applying at a second working position at least one first portion of the tread band at a radially outer position with respect to a second belt structure previously assembled on said second auxiliary drum of the finishing station; said application step being carried out by laying down according to a predetermined path at least one continuous elongated element of green elastomeric material at a radially outer position with respect to said second belt structure;
   b5) applying at at least one third working position at least one second portion of the tread band at a radially outer position with respect to a third belt structure assembled on at least one third auxiliary drum of the finishing station; said application step being carried out by laying down according to a predetermined path at least one continuous elongated element of green elastomeric material at a radially outer position with respect to said third belt structure;
   b6) positioning the first auxiliary drum supporting the first belt structure at said second working position;
   b7) positioning the second auxiliary drum supporting the second belt structure and said at least one portion of the tread band at said third working position;
   b8) positioning said at least one third auxiliary drum supporting the substantially cylindrical sleeve thus obtained at a picking position of the finishing station;
   wherein said steps b1), b2) and from b5) to b8) are repeated cyclically;
   wherein steps b1), b2) and b5) are carried out at least in part simultaneously with one another; and
   wherein steps from b6) to b8) are carried out at least in part simultaneously with one another.
3. Preferably, the aforementioned steps b) and c) are carried out in a time interval substantially equal to or smaller than, the time for carrying out said step a) of building the carcass structure.
4. Preferably, the aforementioned step b1) comprises the step of
   i) applying at a radially outer position with respect to the first auxiliary drum one strip-like element of green elastomeric material including at least one reinforcing cord to form axially contiguous circumferential coils, so as to obtain said belt layer including reinforcing cords substantially parallel to the circumferential development direction of the sleeve.
5. Preferably, the aforementioned step b1) comprises the steps of:
   ii) applying at a radially outer position with respect to the first auxiliary drum a first belt layer including first reinforcing cords inclined with respect to the circumferential development direction of the sleeve; and
   iii) applying at a radially outer position with respect to the first belt layer a second belt layer comprising second reinforcing cords inclined along a crossed direction with respect to said first reinforcing cords.
6. In a preferred embodiment of the invention according to items 4 and 5 above wherein step b1) comprises the aforementioned steps i), ii) and iii), the strip-like element of green elastomeric material is preferably applied at a radially outer position with respect to the second belt layer.
7. Preferably, the aforementioned step b1) further comprises the step of:
   iv) applying a further layer of green elastomeric material at a radially outer position with respect to said belt layer, said layer comprising a plurality of reinforcing cords.
8. Preferably, the aforementioned step b2) is carried out at said at least one second working position by laying down at a radially outer position with respect to said second belt structure a first and a second continuous elongated element of green elastomeric material.
9. In a preferred embodiment according to item 8 above, the aforementioned step b2) is preferably carried out at said at least one second working position by laying down said first continuous elongated element of green elastomeric material at a radially outer position with respect to said second belt structure along substantially the entire transversal development thereof so as to form a radially inner layer of the tread band.
10. In a preferred embodiment according to item 8 above, the aforementioned step b2) is preferably carried out at said at least one second working position by laying down said second continuous elongated element at a radially outer position with respect to said radially inner layer of the tread band along substantially the entire transversal development thereof so as to form a radially outer layer of the tread band.
11. In a preferred embodiment according to item 8 above, the aforementioned step b2) is preferably carried out at said at least one second working position by laying down said first continuous elongated element at a radially outer position with respect to at least one portion of said second belt structure so as to form a corresponding portion of the tread band.
12. In a preferred embodiment according to item 11 above, the aforementioned step b2) is preferably carried out at said at least one second working position by laying down said second continuous elongated element at an axially aligned position with respect to said portion of the tread band formed by said first continuous elongated element, so as to form a further portion of the tread band.
13. In a preferred embodiment according to items 2 and 9 above, the aforementioned step b2) is preferably carried out at said at least one second working position by laying down a second continuous elongated element at a radially outer position with respect to at least one portion of said radially inner layer of the tread band so as to form a corresponding portion of a radially outer layer of the tread band.
14. In a preferred embodiment according to item 13 above, the aforementioned step b5) is preferably carried out by laying down at said at least one third working position at least one third continuous elongated element of green elastomeric material at an axially aligned position with respect to said at least one portion of a radially outer layer of the tread band formed by said second continuous elongated element, so as to form a further portion of the radially outer layer of the tread band.
15. In a preferred embodiment according to item 2 above, the aforementioned step b2) is preferably carried out at said at least one second working position by laying down a first continuous elongated element of green elastomeric material at a radially outer position with respect to at least one portion of said second belt structure so as to form a corresponding portion of a radially inner layer of the tread band.
16. In a preferred embodiment according to item 15 above, the aforementioned step b2) is preferably carried out at said at least one second working position by laying down a second continuous elongated element at an axially aligned position with respect to said at least one portion of a radially inner layer of the tread band formed by said first continuous elongated element, so as to form a further portion of the radially inner layer of the tread band.
17. In a preferred embodiment according to item 16 above, the aforementioned step b5) is preferably carried out by laying down at said at least one third working position at least one third continuous elongated element of green elastomeric material at a radially outer position with respect to the radially inner layer of the tread band along substantially the entire transversal development thereof so as to form a radially outer layer of the tread band.
18. In a preferred embodiment according to any one of items from 8 to 17 above, the first and the second continuous elongated elements are preferably laid down at opposite sides of said second auxiliary drum.
19. Preferably, the aforementioned step b2) or, respectively, in a preferred embodiment according to item 2 above, said steps b2) and b5), are carried out by delivering said continuous elongated elements from respective delivery members arranged at said at least one second or at said second and at said at least one third working position near said second or said second and said at least one third auxiliary drum respectively, simultaneously with winding of the continuous elongated elements on said drums.
20. Preferably, the aforementioned step b) further comprises the step of
   b9) applying according to a respective predetermined path a further continuous elongated element of green elastomeric material at said picking position at a radially outer position with respect to said second belt structure.
21. In a preferred embodiment according to item 20 above, the aforementioned step b9) is preferably carried out by delivering said further continuous elongated element from a respective delivery member arranged at said picking position near said second auxiliary drum, simultaneously with winding of the continuous elongated element on said drum.
22. In a preferred embodiment according to item 2 above, the aforementioned step b) preferably further comprises the step of
   b10) applying according to a respective predetermined path a further continuous elongated element of green elastomeric material at said picking position at a radially outer position with respect to said third belt structure.
23. In a preferred embodiment according to item 22 above, the aforementioned step b10) is preferably carried out by delivering said further continuous elongated element from a respective delivery member arranged at said picking position near one of said auxiliary drums, simultaneously with winding of the continuous elongated element on one of said auxiliary drums.
24. In a preferred embodiment according to any one of items 19, 21 or 23 above, the delivery of said continuous elongated elements is preferably carried out by extrusion through said delivery members.
25. In a preferred embodiment according to any one of items 19 or 21 above, the aforementioned steps b2) or b9) are preferably effected by carrying out, simultaneously with the application of said at least one continuous elongated element, the steps of:
   d) imparting to said second auxiliary drum carrying the second belt structure a rotary motion about a geometric axis thereof, so as to circumferentially distribute said at least one continuous elongated element at a radially outer position with respect to the second belt structure;
   e) carrying out controlled relative displacements between said second auxiliary drum and the delivery member to form with said at least one continuous elongated element a plurality of coils arranged in mutual side by side relationship to define said at least one portion of the tread band.
26. In a preferred embodiment according to any one of items 19 or 23 above, the aforementioned steps b5) or b10) are preferably effected by carrying out, simultaneously with the application of said at least one continuous elongated element the steps of:
   d') imparting to said at least one third auxiliary drum carrying the third belt structure a rotary motion about a geometric axis thereof, so as to circumferentially distribute said at least one continuous elongated element at a radially outer position with respect to the third belt structure;
   e') carrying out controlled relative displacements between said at least one third auxiliary drum and the delivery member to form with said at least one continuous elongated element a plurality of coils arranged in mutual side by side relationship to define at least one radially outer portion of the tread band.
27. In a preferred embodiment according to item 25 above, said displacements are preferably carried out by moving the second auxiliary drum with respect to said delivery member.
28. In a preferred embodiment according to item 26 above, said displacements are preferably carried out by moving the third auxiliary drum with respect to said delivery member.
29. In a preferred embodiment according to any one of items 25 or 26 above, the aforementioned steps d), e), d') and e') are preferably carried out by a displacing apparatus active on said second or, respectively, on said second and said at least one third auxiliary drum.
30. Preferably, the working positions of the finishing station are angularly offset with one another.
31. In a preferred embodiment according to any one of items 29 or 30 above, the auxiliary drums are preferably supported by a substantially turret-like displacing apparatus at positions angularly offset with one another and the steps b3) and b4) or from b6) to b8) are preferably carried out by rotating said displacing apparatus about a substantially vertical rotation axis.
32. In a preferred embodiment according to item 31 above, at least one of said auxiliary drums is preferably slidably supported by said displacing apparatus and the method preferably comprises the further step of translating said at least one auxiliary drum towards the rotation axis of the displacing apparatus before carrying out said rotation step of said apparatus.
33. Preferably, the picking position of the cylindrical sleeve substantially coincides with said first working position.
34. Preferably, the method further comprises after said step c), the step of shaping said carcass structure according to a substantially toroidal shape, so as to associate the same to said substantially cylindrical sleeve transferred at a radially outer position with respect to the carcass structure.
35. In a preferred embodiment according to any one of items 19, 21 or 23 above, the delivery of at least one of said continuous elongated elements is preferably carried out by delivering at least one semifinished product of green elastomeric material in the form of a continuous strip by means of at least one of said delivery members.
   In accordance with a further aspect of the invention, the above mentioned method can be carried out by means of a plant for manufacturing tyres for vehicle wheels as defined in attached claim 17.
   Preferred features of the manufacturing plant according to the invention are defined in the following items.
37. Preferably, the plant further comprises:
   b6) at least one third auxiliary drum supported by the displacing apparatus;
   b7) at least one second delivery member of a continuous elongated element of green elastomeric material arranged at at least one third working position for operatively interacting with one of said auxiliary drums.
38. Preferably, the plant further comprises at least one delivery device of belt layers arranged at said first working position for operatively interacting with one of said auxiliary drums.
39. Preferably, the plant comprises at least one further delivery device of a belt layer comprising a plurality of reinforcing cords, arranged at said first working position for operatively interacting with one of said auxiliary drums.
40. Preferably, the plant further comprises at least one third delivery member of a respective third continuous elongated element of green elastomeric material arranged at said picking position for operatively interacting with one of said auxiliary drums.
41. Preferably, the delivery members of said continuous elongated elements comprise at least one extruder.
42. Preferably, at least one of said delivery members of the continuous elongated elements delivers said continuous elongated element as a semifinished product of green elastomeric material in the form of a continuous strip.
43. Preferably, said displacing apparatus comprises at least one drum rotation unit adapted to rotate the auxiliary drums about their geometrical axis.
44. In a preferred embodiment according to any one of items 37 or 40 above, said at least one third auxiliary drum is preferably slidably supported by said displacing apparatus.
45. Preferably, said displacing apparatus comprises at least one drum translating unit adapted to carry out controlled axial movements of said auxiliary drums at said working positions or at said picking position.
46. Preferably, said displacing apparatus is of the substantially turret-like type and is adapted to support said auxiliary drums at positions angularly offset with one another.
47. In a preferred embodiment according to item 46 above, the plant preferably further comprises at least one driving unit adapted to rotate said displacing apparatus about a substantially vertical rotation axis.
48. In a preferred embodiment according to items 45 and 46 above, said drum translating unit of the displacing apparatus preferably translates said auxiliary drums between said working positions or said picking position and a stand-by position defined between said working positions or picking position and a rotation axis of the displacing apparatus.
49. Preferably, the plant further comprises at least two delivery members of respective continuous elongated elements of green elastomeric material arranged at said at least one second working position for operatively interacting at opposite sides of one of said auxiliary drums.
50. In a preferred embodiment according to item 37 above, the plant preferably further comprises at least two delivery members of respective continuous elongated elements of green elastomeric material arranged at said at least one third working position for operatively interacting at opposite sides of one of said auxiliary drums.
51. Preferably, the picking position of the cylindrical sleeve substantially coincides with said first working position.
52. Preferably, the plant further comprises at least one apparatus for shaping said carcass structure according to a substantially toroidal shape so as to associate the substantially cylindrical sleeve comprising the belt structure and the tread band to said carcass structure.

According to a further aspect thereof, the invention relates to a plant for making tyres for vehicle wheels, comprising a manufacturing plant as defined above and at least one vulcanisation station for vulcanising the tyres manufactured in said manufacturing plant.

Additional features and advantages of the invention will become more clearly apparent from the detailed description of a preferred, but not exclusive, embodiment of a method and of a plant for manufacturing tyres for vehicle wheels, in accordance with the present invention.

### Brief description of the drawings

Such a description will be set out hereinafter with reference to the accompanying drawings, given by way of indication and not of limitation, wherein:
- Figure 1 is a schematic top view of a first preferred embodiment of a plant for manufacturing tyres in accordance with the present invention;
- Figure 2 is a schematic fragmentary cross-section view of a tyre obtainable in accordance with the method and the plant of the present invention;
- Figure 3 is a schematic top view of a second preferred embodiment of a plant for manufacturing tyres in accordance with the present invention.

### Detailed description of the preferred embodiments

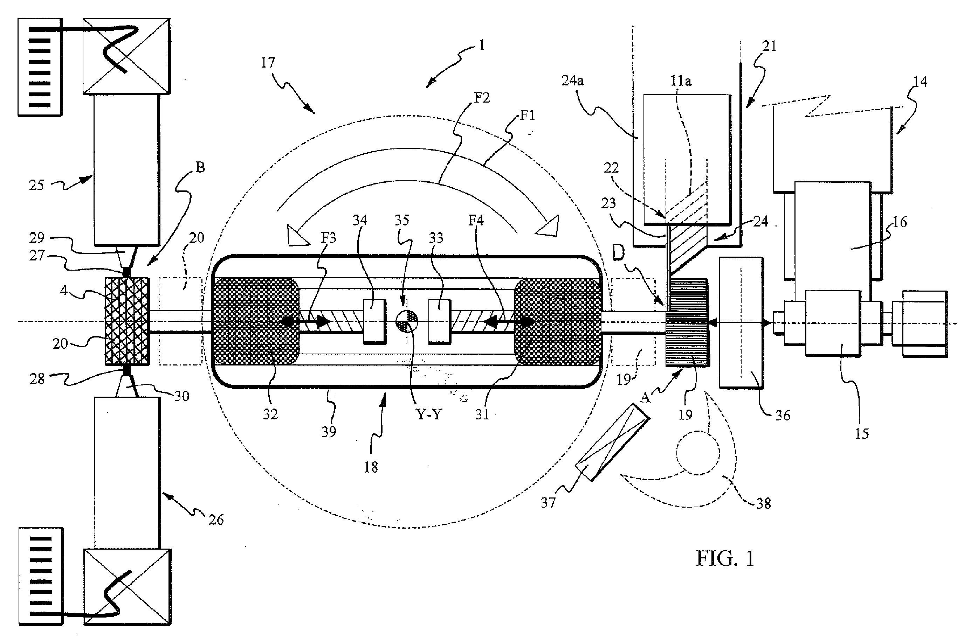

With reference to Figure 1, a plant for manufacturing tyres for vehicle wheels, adapted to carry out a manufacturing method in accordance with the present invention, according to a first preferred embodiment, is generally indicated at 1.

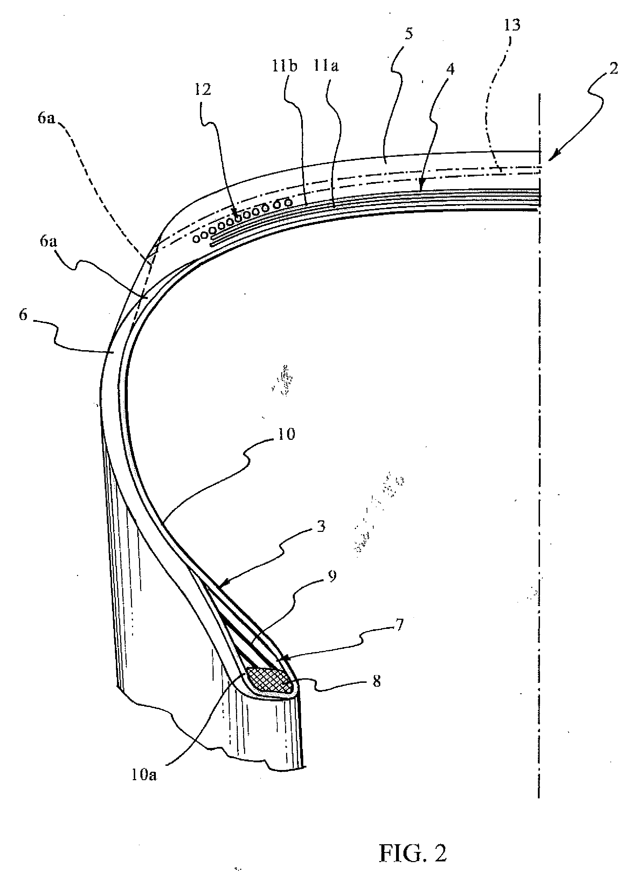

A tyre that can be manufactured by the plant 1 is generally indicated at 2 in Figure 2 and can be a tyre intended to equip the wheels of a car or the wheels of a heavy vehicle.

The tyres 2 essentially comprise a carcass structure 3 having a substantially toroidal conformation, a belt structure 4 having a substantially cylindrical conformation, circumferentially extending around the carcass structure 3, a tread band 5 applied to the belt structure 4 at a radially outer position thereof, and a pair of sidewalls 6 laterally applied, on opposite sides, to the carcass structure 3 and each extending from a side edge of the tread band 5 up to a radially inner edge of the carcass structure 3.

Each sidewall 6 essentially comprises a layer of elastomeric material having a suitable thickness and may have a radially outer end tailpiece 6a at least in part covered by the axial end of the tread band 5, as shown in solid line in Figure 2, according to a construction scheme of the type usually identified as "underlying sidewalls".

Alternatively, the radially outer end tailpieces 6a of the sidewalls 6 can be laterally superposed on the corresponding axial ends of the tread band 5, as shown in dashed line in Figure 2, to realise a construction scheme of the type usually identified as "overlying sidewalls".

The carcass structure 3 comprises a pair of annular anchoring structures 7 integrated in regions usually identified as "beads", each of them being for example made up of a substantially circumferential annular insert 8, usually called "bead core", and carrying an elastomeric filler 9 at a radially outer position thereof. Turned up around each of the annular anchoring structures 7 are the end flaps 10a of one or more carcass plies 10 comprising textile or metallic cords extending transversely with respect to the circumferential development of the tyre 2, possibly according to a predetermined inclination between the two annular anchoring structures 7.

The belt structure 4 can in turn comprise one or more belt layers 11a, 11b comprising reinforcing cords made of a suitable material, for example metallic or textile cords.

Preferably, said reinforcing cords are suitably inclined with respect to the circumferential development of the tyre 2, according to respectively crossed orientations between one belt layer and the other.

The belt structure 4 also comprises at least one belt layer 12 at a radially outer position with respect to the belt layers 11a, 11b and including at least one reinforcing cord, preferably a plurality of cords circumferentially wound according to coils axially arranged side by side and usually called "zero-degree cords" in the art.

In a preferred embodiment, the belt structure 4 can comprise a belt layer 12 including zero-degree cords substantially extending for the entire transversal development of the belt structure 4; alternatively, the belt structure 4 can comprise a pair of belt layers 12, each including zero-degree cords, arranged near opposite shoulder zones of the tyre 2 and axially extending along a portion of limited width, as schematically shown in Figure 2.

In heavy-duty tyres, such as tyres for trucks and heavy transport vehicles, the belt structure 4 may also incorporate, at a radially outer position with respect to the belt layer 12, a further layer 13 made of elastomeric material preferably including a plurality of reinforcing cords, usually referred to as "breaker layer" and intended to prevent foreign bodies from entering the underlying belt layers.

The tread band 5 may essentially consist of a single elastomeric material or, alternatively, it may comprise portions consisting of respective elastomeric materials having appropriate composition and appropriate mechanical and chemical-physical characteristics.

These portions may be constituted by one or more radially superposed layers having suitable thickness, by suitably shaped sectors arranged according to a predetermined configuration along the axial development of the tread band or by a combination of both.

Thus, for example, the tread band 5 may include a radially inner layer or base layer, essentially consisting of a first elastomeric material having appropriate composition and mechanical and chemical-physical characteristics, for example adapted to reduce the rolling resistance of the tyre, and a radially outer layer essentially consisting of a second elastomeric material having composition and mechanical and chemical-physical characteristics differing from the first elastomeric material, for example adapted to optimise the grip performance on wet surfaces and the wear resistance of the tyre.

The individual components of the carcass structure 3 and of the belt structure 4, such as in particular the annular anchoring structures 7, the carcass plies 10, the belt layers 11a, 11b and the elements of elastomeric material (strip-like elements) including at least one reinforcing cord and intended to form the belt layer 12 and optionally the breaker layer 13, are supplied to the plant 1 in the form of semifinished products made during preceding manufacturing steps, to be suitably assembled with each other according to the steps described hereinafter.

With reference to Figure 1, a first preferred embodiment of a plant 1 for manufacturing tyres for vehicle wheels according to the invention, for example for manufacturing a tyre 2 of the type illustrated above, shall now be described.

In the following description, reference will be made to the various components of the tyre 2 in their state as semifinished products and, as regards the various elastomeric materials used, in their green state, that is, prior to the vulcanisation operations which link the various semifinished products together to give the final tyre 2.

The plant 1 comprises a building station 14 intended to build a substantially cylindrical carcass structure 3 comprising one or more carcass plies 10 operatively associated to the annular anchoring structures 7 axially spaced apart from each other.

The building station 14 comprises a primary drum 15, not described in detail as it can be made in any convenient manner, on which the carcass ply or plies 10 are preferably wound; said plies come from a feeding line 16 along which they are cut into sections of appropriate length related to the circumferential extension of the primary drum 15, before being applied thereon to form a so-called substantially cylindrical "carcass sleeve".

The building station 14 also comprises a line (not shown) for feeding the sidewalls 6, which line supplies a semifinished product in the form of a continuous strip of elastomeric material from which sections of predetermined length are cut out, said length being related to the circumferential extension of the primary drum 15 and of the tyre 2 to be manufactured.

Alternatively, the building station 14 can be provided with a further building drum (not shown) on which the assembly of the carcass structure 3 components and possibly also of the sidewalls 6 takes place, and with a transfer device (also not shown) for transferring the assembled carcass sleeve onto the primary drum 15.

The plant 1 further comprises a finishing station 17 intended to manufacture a substantially cylindrical sleeve comprising:
i) the tread band 5 including one or more green elastomeric materials, the tread band being applied at a radially outer position with respect to
ii) the belt structure 4 comprising the layer 12 including reinforcing cords substantially parallel to the circumferential development direction of the substantially cylindrical sleeve, which layer 12, in this preferred variant, is applied at a radially outer position with respect to the layers 11a, 11b including reinforcing cords suitably inclined with respect to the circumferential development of the sleeve according to respectively crossed orientations between one belt layer and the other, and optionally the breaker layer 13 which, in this preferred variant, is applied at a radially outer position with respect to the layer 12.

The finishing station 17 comprises in turn a displacing apparatus 18 adapted to support a first auxiliary drum 19 and a second auxiliary drum 20 and to position said auxiliary drums 19, 20 at a plurality of working positions at which the operating steps required for manufacturing the above substantially cylindrical sleeve are carried out.

More particularly, the displacing apparatus 18 is adapted to position the auxiliary drums 19, 20 at a first working position, indicated with letter A in Figure 1, wherein the belt structure 4 is assembled, at least one second working position, indicated with letter B in Figure 1, wherein the tread band 5 is applied, and a picking position, indicated with letter D in Figure 1, of the substantially cylindrical sleeve manufactured in the finishing station 17.

In this preferred embodiment, the picking position D of the substantially cylindrical sleeve substantially coincides with the first working position A.

The first working position A and the second working position B are defined in different zones of the finishing station 17 and, preferably, they are defined at opposite sides of the displacing apparatus 18.

In the preferred embodiment illustrated in Figure 1, moreover, it is provided that in the picking position D the auxiliary drum 19, 20 positioned therein by the displacing apparatus 18 is arranged according to a relationship of coaxial alignment with the primary drum 15 of the building station 14.

The finishing station 17 comprises an apparatus for applying the belt structure 4 on the same auxiliary drum, generally indicated at 21, adapted to operatively interact with the auxiliary drum 19, 20 positioned at the first working position A by the displacing apparatus 18.

The applying apparatus 21 comprises in turn at least one delivery device 24 of the belt layers 11a, 11b arranged at the first working position A for operatively interacting with the auxiliary drum 19, 20 arranged at said working position by the displacing apparatus 18.

By way of example, the delivery device 24 may comprise, in a way known *per se,* at least one feeding line 24a, along which the semifinished products in the form of a continuous strip are caused to move forward, said strip being then cut into sections of a length corresponding to the circumferential development of the auxiliary drums 19, 20 simultaneously with the formation of the respective belt layers 11 a, 11b on the same drums.

The applying apparatus 21 of the finishing station 17 further comprises at least one delivery device 22 of a strip-like element 23 of green elastomeric material including at least one reinforcing cord, preferably a plurality of textile or metallic reinforcing cords, strip-like element 23 that is applied at a radially outer position with respect to the belt layers 11a, 11b to form axially contiguous circumferential coils intended to form the belt layer 12.

To this end, the delivery device 22 is arranged at the first working position A for operatively interacting with the auxiliary drum 19, 20 arranged at said working position by the displacing apparatus 18.

In a preferred embodiment, the apparatus 21 further comprises at least one delivery device of a further belt layer preferably including a plurality of reinforcing cords, arranged at the first working position A for operatively interacting with the auxiliary drum 19, 20 arranged at said working position by the displacing apparatus 18 for forming the aforementioned breaker layer 13.

The finishing station 17 further comprises at least one delivery member, preferably at least two delivery members 25, 26, of respective continuous elongated elements 27, 28 of green elastomeric material, which delivery members are arranged at the second working position B for operatively interacting with the auxiliary drum 19, 20 arranged at said working position by the displacing apparatus 18.

In the preferred embodiment shown in Figure 1, the delivery members 25, 26 of the continuous elongated elements 27, 28 are arranged at the second working position B for operatively interacting at opposite sides of the auxiliary drum 19, 20 arranged at said working position by the displacing apparatus 18.

The delivery members 25, 26 are adapted to lay down the continuous elongated elements 27, 28 according to contiguous circumferential coils on a belt structure 4 previously assembled on the auxiliary drum 19 or 20 arranged at the second working position B.

More particularly, the delivery members 25, 26 can for example comprise an extruder or, alternatively, an applicator roller or other member adapted to deliver the continuous elongated elements 27, 28 at a radially outer position with respect to the belt structure 4 supported by the auxiliary drum 19 or 20 at the second working position B, simultaneously with winding of the elongated elements themselves on the belt structure 4 as will be better described hereinafter.

Preferably, each of the delivery members 25, 26 comprises at least one extruder indicated in Figure 1 with reference numerals 29, 30.

In order to wind the continuous elongated elements delivered by the extruders 29, 30 on the belt structure 4, the displacing apparatus 18 of the preferred embodiment shown in Figure 1 comprises at least one drum rotation unit, preferably a pair of rotation units 31, 32, adapted to rotate the auxiliary drums 19, 20 about their geometrical axis.

In this way, it is advantageously possible to carry out, in an effective manner, a controlled deposition of the continuous elongated elements 27, 28 at a radially outer position with respect to the belt structure 4.

Preferably, and according to what is illustrated in Figure 1, the displacing apparatus 18 is of the substantially turret-like type and is adapted to support the auxiliary drums 19, 20 at positions angularly offset with each other, for example offset at an angle of about 180°.

Preferably, the displacing apparatus 18 is further provided with at least one driving unit 35 adapted to rotate the displacing apparatus 18 as a whole about a substantially vertical rotation axis Y-Y so as to position the auxiliary drums 19, 20 at the above first and second working positions A, B.

According to the invention, the auxiliary drums 19, 20 are slidably supported by the displacing apparatus 18.

Preferably, the auxiliary drums 19, 20 and the respective driving units 31, 32 are slidably supported by the displacing apparatus 18 by a supporting carriage, not better shown in Figure 1, which is in turn slidably mounted on a rotatable supporting platform 39 of the displacing apparatus 18.

Preferably, each auxiliary drum 19, 20 is in integral translating motion with the corresponding rotation unit 31, 32 along the rotatable supporting platform 39.

In a preferred embodiment, the displacing apparatus 18 comprises at least one drum translating unit adapted to carry out controlled axial movements of the drums 19, 20 at the working positions A, B or at the picking position D of the substantially cylindrical sleeve including the belt structure 4 and the tread band 5 manufactured in the finishing station 17.

Preferably, said drum translating unit causes controlled axial movements not only of the auxiliary drums 19, 20 but also of the relevant rotation units 31, 32.

In the preferred embodiment shown in Figure 1, the displacing apparatus 18 comprises a pair of drum translating units 33, 34, for example of the type comprising a worm screw adapted to engage with a corresponding nut thread associated to said carriage supporting the auxiliary drums 19, 20.

Clearly, the drum translating units can comprise actuating mechanisms differing from those indicated above by way of example and selectable by a man skilled in the art as a function of specific application requirements.

Preferably, the drum translating units 33, 34 of the displacing apparatus 18 move the drums 19, 20 between the working positions A, B or the picking position D and a stand-by position defined between said positions and the rotation axis Y-Y of the displacing apparatus 18.

Preferably, said stand-by positions of the auxiliary drums 19, 20 are defined within the outer perimeter of the rotatable supporting platform 39.

Preferably, the drum translating units 33, 34 move the drums 19, 20 along a radial direction passing through the rotation axis Y-Y of the displacing apparatus 18 as illustrated by the double arrows F3, F4 in Figure 1.

The drum translating units 33, 34 thus allow to achieve the following advantageous technical effects:
i) that of properly moving the auxiliary drums 19, 20 with respect to the delivery members 25, 26;
ii) that of carrying out a controlled deposition of the continuous elongated elements 27, 28 at a radially outer position with respect to the belt structure 4 according to coils partially arranged side by side and/or partially superposed with each other according to what is required to manufacture a tread band 5 having a high quality level,
iii) that of carrying out a predetermined offset of the belt layers delivered by the applying apparatus 21, for example to compensate any design asymmetries of the tyre 2; and
iv) that of decreasing the transversal dimensions and the inertia forces during the displacement of the auxiliary drums 19, 20 between the working positions A and B by moving the auxiliary drums 19, 20 close to the rotation axis Y-Y of the displacing apparatus 18.

Advantageously, moreover, the drum translating units 33, 34 allow to carry out a controlled deposition of the continuous elongated elements 27, 28 while maintaining stationary the delivery members 25, 26 with a simplification of the mechanical application system of the continuous elongated elements and, thereby, with a reduction of the costs for realising the plant 1.

The plant 1 further comprises at least one transfer device 36 of the substantially cylindrical sleeve manufactured in the finishing station 17, adapted to operatively interact with one of the auxiliary drums 19, 20 at the above-identified picking position D - in this case substantially coinciding with the first working position A - for transferring the substantially cylindrical sleeve manufactured in the finishing station 17 at a radially outer position with respect to the carcass structure 3 built in the building station 14.

The transfer device 36 preferably has a substantially annular conformation and is operated in a way known *per se* (not shown) so as to be arranged around the auxiliary drum 19, 20 positioned at the picking position D for picking up the substantially cylindrical sleeve including the belt structure 4 and the tread band 5 manufactured in the finishing station 17 and for transferring said sleeve coaxially to the carcass structure 3 built in the building station 14.

In an alternative preferred embodiment, not shown for simplicity, the plant 1 may further comprise a third delivery member of a respective continuous elongated element of green elastomeric material arranged at the picking position D (for example coinciding with the first working position A) of the substantially cylindrical sleeve manufactured in the finishing station 17 for operatively interacting with the auxiliary drum 19, 20 positioned therein by the displacing apparatus 18.

In this case, the plant 1 allows to apply the tread band 5 both in the working position B, and in the picking position D (for example coinciding with the first working position A) of the substantially cylindrical sleeve, wherever this is required to meet specific application requirements.

The plant 1 further comprises at least one apparatus (not shown being known *per se*) for shaping the carcass structure 3 according to a substantially toroidal shape so as to associate the substantially cylindrical sleeve comprising the belt structure 4 and the tread band 5 manufactured in the finishing station 17 to the carcass structure 3.

Preferably, this shaping apparatus is adapted to operatively interact with the primary drum 15 within the building station 14 so as to carry out, as it will be better understood hereinafter, a so-called unistage manufacturing process.

The plant 1 finally comprises a control unit 37 by means of which an operator 38 can program and manage the various operating steps that can be carried out by the same manufacturing plant.

With reference to the plant 1 described above, a first preferred embodiment of a method according to the invention for manufacturing tyres for vehicle wheels, for example the tyre 2 described above, will now be described.

In particular, the method will be illustrated with reference to steady-state working conditions, as illustrated in Figure 1, wherein the auxiliary drum 19 is in the first working position A and does not support any semifinished products, whereas the auxiliary drum 20 is in the second working position B and supports a belt structure 4 assembled on said drum in a previous step of the method.

In a first step of the method, a substantially cylindrical carcass structure 3 comprising at least one carcass ply 10 operatively associated to the annular anchoring structures 7 axially spaced apart from each other, is built in the building station 14.

In this step, the carcass ply or plies 10 coming from the feeding line 16 along which they are cut into sections of appropriate length, related to the circumferential development of the primary drum 15, before being applied thereto, are wound on the primary drum 15 to form a so-called substantially cylindrical "carcass sleeve".

Afterwards, the annular anchoring structures 7 are fitted onto the end flaps 10a of ply/plies 10 to subsequently carry out the turning-up of the end flaps themselves to cause an engagement of the anchoring structures 7 into the loops thus formed by the turned-up ply/plies 10. The tyre sidewalls 6 may also be applied to the carcass sleeve, which sidewalls come from at least one respective sidewall-feeding line (not shown) supplying a semifinished product in the form of a continuous strip of elastomeric material, from which sections of predetermined length are cut out, said length being related to the circumferential development of the primary drum 15 and of the tyre 2 to be manufactured.

The method of the invention provides for the manufacture, in the finishing station 17, of a substantially cylindrical sleeve comprising the tread band 5 applied at a radially outer position with respect to the belt structure 4 including at least one layer 12 including reinforcing cords substantially parallel to the circumferential development direction of the sleeve.

The manufacture of this substantially cylindrical sleeve occurs at least in part simultaneously with the assembly of the components of the carcass structure 3 in the form of cylindrical sleeve (or carcass sleeve) on the primary drum 15.

More particularly, the manufacture of the substantially cylindrical sleeve including the belt structure 4 and the tread band 5 carried out in the finishing station 17 comprises the operating steps illustrated hereinafter.

According to the invention, these steps are carried out at least in part simultaneously.

In a first step, a first belt structure 4 is assembled at the first working position A on the first auxiliary drum 19 of the finishing station 17.

In a preferred embodiment, the assembly step of the first belt structure 4 provides in the first place for carrying out the steps of applying at a radially outer position with respect to the first auxiliary drum 19 the first belt layer 11a comprising respective reinforcing cords inclined with respect to the circumferential development direction of the sleeve and of applying at a radially outer position with respect to the first belt layer 11 a the second belt layer 11b comprising reinforcing cords inclined along a crossed direction with respect to said reinforcing cords belonging to the first belt layer 11a.

Advantageously, these steps are carried out by means of the delivery device 24 of the belt layers which operatively interacts with the auxiliary drum 19 positioned at the first working position A by the displacing apparatus 18 and by the rotation unit 31 which rotates the auxiliary drum 19 about its geometrical axis during the application of the various semifinished products.

More specifically, the feeding line 24a of the delivery device 24 delivers semifinished products in the form of a continuous strip, which are then cut into sections of a length corresponding to the circumferential development of the auxiliary drum 19 simultaneously with the formation of the respective belt layers 11a, 11b on the same drum, which is simultaneously rotated by the rotation unit 31.

In a preferred embodiment, the assembly step of the first belt structure 4 therefore provides for carrying out the step of applying at a radially outer position with respect to the first auxiliary drum 19 at least one strip-like element 23 of green elastomeric material including the reinforcing cord(s) to form axially contiguous circumferential coils, so as to obtain the belt layer 12 including reinforcing cords substantially parallel to the circumferential development direction of the substantially cylindrical sleeve being manufactured.

Preferably, said strip-like element 23 is applied at a radially outer position with respect to the second belt layer 11b substantially along the entire transversal development of the first belt structure 4 or, alternatively, only at opposed axial ends of the underlying belt layers 11a, 11b.

Advantageously, this step is carried out by the delivery device 22 of the application apparatus 21, which is also arranged at the first working position A for operatively interacting with the auxiliary drum 19 arranged therein by the displacing apparatus 18.

In a preferred embodiment, the assembly step of the first belt structure 4 finally provides for carrying out the step of applying the breaker layer 13 of green elastomeric material preferably including a plurality of reinforcing cords preferably inclined with respect to the circumferential development direction of the sleeve, at a radially outer position with respect to the belt layer 12.

Advantageously, this step is carried out by a further delivery device of a belt layer preferably including a plurality of reinforcing cords (delivery device not shown for simplicity in Figure 1), arranged at the first working position A for operatively interacting with the auxiliary drum 19 arranged therein by the displacing apparatus 18.

The manufacture of the substantially cylindrical sleeve including the belt structure 4 and the tread band 5 provides for forming a tread band 5 at a radially outer position with respect to a second belt structure 4 assembled on the second auxiliary drum 20 in a previous operating step of the method.

According to the invention, this forming step of the tread band 5 on the second auxiliary drum 20 arranged at the second working position B is carried out at least in part simultaneously with the step of assembling the first belt structure 4 on the first auxiliary drum 19 arranged at the first working position A.

More particularly, the method of the invention provides for applying a tread band 5 at the second working position B at a radially outer position with respect to a second belt structure 4 previously assembled on the second auxiliary drum 20 of the finishing station 17 at the first working position A.

Advantageously, the application step of the tread band 5 is carried out by laying down according to a predetermined path at least one continuous elongated element of green elastomeric material at a radially outer position with respect to the second belt structure 4 assembled on the second auxiliary drum 20.

In a preferred embodiment, the application step of the tread band 5 is carried out at the second working position B by laying down said at least two continuous elongated elements 27, 28 of green elastomeric material at a radially outer position with respect to the belt structure 4 assembled on the second auxiliary drum 20.

Preferably, the continuous elongated elements 27, 28 are laid down at opposite sides of the second auxiliary drum 20 arranged at the second working position B by the displacing apparatus 18.

Preferably, the continuous elongated elements 27, 28 consist of respective elastomeric materials having different mechanical and/or chemical-physical characteristics so as to impart the desired performance to the tread band 5.

Advantageously, the application step of the tread band 5 is carried out by the delivery members 25, 26 arranged at the second working position B for operatively interacting with the auxiliary drum 20 arranged therein by the displacing apparatus 18.

In an alternative embodiment, at least one of the delivery members 25, 26 can deliver at least one of said continuous elongated elements 27, 28 in the form of a semifinished product made of elastomeric material in the form of a continuous strip, so as to form a portion of the tread band 5, such as a radially inner layer thereof. Preferably, this strip has a width substantially equal to the transversal development of the tread band 5 and is preferably cut into sections of a length corresponding to the circumferential development of the auxiliary drum 20 simultaneously with the formation of at least one portion of the tread band 5 on the same drum, which is simultaneously rotated by the rotation unit 32.

Preferably, however, the delivery of the continuous elongated elements 27, 28 is carried out by extrusion through the extruders 29, 30 of the delivery members 25, 26.

Preferably, the continuous elongated elements 27, 28 delivered by each extruder 29, 30 can advantageously possess a flattened section, so as to modulate the thickness of the elastomeric layer formed by them at a radially outer position with respect to the belt structure 4 by changing the overlapping amount of the contiguous coils and/or the orientation of the profile along a transversal direction of each elongated element 27, 28 coming from the corresponding extruder 29, 30 with respect to the underlying surface.

Preferably, the continuous elongated elements 27, 28 are laid down according to contiguous circumferential coils axially arranged side by side and/or radially superposed at a radially outer position with respect to the second belt structure 4 supported by the auxiliary drum 20 at the second working position B.

In this preferred embodiment, the application step of the tread band 5 is carried out by delivering the continuous elongated elements 27, 28 by means of the delivery members 25, 26 arranged at the second working position B near the second auxiliary drum 20, simultaneously with winding of the continuous elongated elements 27, 28 on said drum.

In particular, such winding is accomplished by carrying out, simultaneously with the application of the continuous elongated elements 27, 28, the steps of:
- imparting to the second auxiliary drum 20 carrying the second belt structure 4 a rotary motion about a geometric axis thereof, so as to circumferentially distribute the continuous elongated elements 27, 28 at a radially outer position with respect to the second belt structure 4;
- carrying out controlled relative displacements between the second auxiliary drum 20 and the delivery members 25, 26 to form with the continuous elongated elements 27, 28 a plurality of coils arranged in mutual side by side relationship to define at least one portion of the tread band 5.

In this preferred embodiment, the controlled relative displacements between the second auxiliary drum 20 and the delivery members 25, 26 are preferably carried out by moving the second auxiliary drum 20 with respect to said delivery members.

Preferably, the continuous elongated elements 27, 28 are delivered by the extruders 29, 30 simultaneously with a controlled rotation movement of the auxiliary drum 20 about its geometrical axis and a controlled translation movement of said drum with respect to the delivery members 25, 26, for example along a direction substantially parallel to said axis.

Advantageously, this rotation-translation movement of the auxiliary drum 20 is carried out by means of the displacing apparatus 18, in particular thanks to the action of the rotation unit 32 and of the translating unit 34 of such apparatus.

In this preferred embodiment of the method of the invention and thanks to the delivery of two continuous elongated elements 27, 28, it is advantageously possible to form, in a very flexible manner from the production point of view, a tread band 5 having structural features capable to achieve the desired performance of the tyre 2.

Thus, for example, it is advantageously possible to form - in a preferred embodiment - a tread band 5 including a pair of radially superposed layers, respectively inner and outer, according to a configuration known in the art with the term of *"cap-and-base"*.

According to this preferred embodiment, the application step of the tread band 5 is carried out at the second working position B by laying down one of the aforementioned continuous elongated elements, for example the continuous elongated element 27, at a radially outer position with respect to the second belt structure 4 supported by the auxiliary drum 20 along substantially its entire transversal development so as to form a radially inner layer of the tread band 5.

Afterwards, the application step of the tread band 5 provides for laying down the second continuous elongated element 28 at a radially outer position with respect to the radially inner layer, of the tread band 5 thus formed.

Advantageously, the laying down of the second continuous elongated element 28 is carried out by substantially the entire transversal development of said radially inner layer so as to form a radially outer layer of the tread band 5.

In this preferred embodiment, therefore, the laying down of the continuous elongated elements 27, 28 according to contiguous circumferential coils axially arranged side by side and/or radially superposed is carried out in two consecutive steps.

In a further preferred alternative embodiment, it is also advantageously possible to form a tread band 5 including two or more axially aligned sectors having specific mechanical characteristics according to a configuration which allows to achieve a plurality of advantageous technical effects, such as for example an improved resistance to the transversal stresses acting on the tread band 5 during use of the tyre 2, or the possibility of keeping the grip performance of the tyre 2 substantially constant as the tread band 5 wears out.

According to this preferred alternative embodiment, the application step of the tread band 5 is carried out at the second working position B by laying down one of said continuous elongated elements, for example the continuous elongated element 27, at a radially outer position with respect to at least one portion of the second belt structure 4 supported by the auxiliary drum 20 so as to form a corresponding portion of the tread band 5.

Afterwards, the application step of the tread band 5 provides for laying down the second continuous elongated element 28 at an axially aligned position with respect to the above portion formed by the continuous elongated element 27, so as to form a further portion of the tread band 5.

In this way it is possible to form a tread band 5 having at least two axially aligned portions or sectors having different mechanical and chemical-physical characteristics.

In this preferred alternative embodiment, the laying down of the continuous elongated elements 27, 28 can be carried out both in consecutive steps and at least in part simultaneously.

Once said steps of assembling the first belt structure 4 on the first auxiliary drum 19 and of applying the tread band 5 at a radially outer position with respect to the second belt structure 4 previously assembled on the second auxiliary drum 20 have been completed, the method of the invention provides for carrying out the steps of positioning the first auxiliary drum 19 supporting the first belt structure 4 at the second working position B and of positioning at the picking position D of the finishing station 17 the second auxiliary drum 20 supporting the substantially cylindrical sleeve including the tread band 5 applied at a radially outer position with respect to the second belt structure 4.

As described above, in a preferred embodiment of the invention, the picking position D of the substantially cylindrical sleeve thus manufactured substantially coincides with the first working position A.

According to the method of the invention, said steps of positioning the auxiliary drums 19 and 20 respectively at the second working position B and at the first working position A, are carried out at least in part simultaneously with each other.

In particular, such steps are preferably carried out by means of the displacing apparatus 18.

In a preferred embodiment and thanks to the fact that the displacing apparatus 18 is of the substantially turret-like type and supports the auxiliary drums 19, 20 at positions preferably angularly offset with each other, said positioning steps of the auxiliary drums 19 and 20 are carried out by rotating the displacing apparatus 18 about the substantially vertical rotation axis Y-Y. In particular, such rotary motion is carried out thanks to the driving unit 35.

In other words, in this preferred embodiment, the position of the auxiliary drums 19 and 20 is effectively exchanged practically simultaneously by simply rotating the displacing apparatus 18 about the rotation axis Y-Y, for example according to one of the two directions of rotation, clockwise and counter clockwise, indicated by the arrows F1 and respectively F2 in Figure 1.

In a preferred embodiment and thanks to the fact that the auxiliary drums 19, 20 are slidably supported by the displacing apparatus 18, the method of the invention comprises the further step of translating the auxiliary drums 19, 20 towards the rotation axis Y-Y of the displacing apparatus 18 before carrying out the rotation step of such apparatus.

Preferably, said step is carried out by the drum translating units 33 and 34 by translating both auxiliary drums 19, 20 and the relevant rotation units 31, 32, which are preferably translationally integral with the same drums.

In this way, it is advantageously possible to decrease both the transversal dimensions and the inertia forces during the movements of the auxiliary drums 19, 20 between the working positions A and B with an increase of the safety features of the plant 1 and with a reduction of the driving force required to the driving unit 35 for rotating the displacing apparatus 18.

Preferably, the auxiliary drums 19, 20 and the relevant rotation units 31, 32 are translated towards the rotation axis Y-Y of the displacing apparatus 18 and are arranged at the above stand-by positions defined inside the outer perimeter of the rotatable supporting platform 39 of such apparatus.

Advantageously, the auxiliary drums 19, 20 of the displacing apparatus 18 are arranged in this case at a safe distance from both the control unit 37 and the operator 38 during the rotation of the displacing apparatus 18, as schematically illustrated in dotted line in Figure 1.

Once these substantially simultaneous positioning steps of the first auxiliary drum 19 at the second working position B and of the second auxiliary drum at the picking position D (in this case coinciding with the first working position A) have been carried out, the finishing station 17 is in an operating condition in which:
i) a substantially cylindrical sleeve including the second belt structure 4 and the tread band 5 ready to be removed from the second auxiliary drum 20 is arranged at the picking position D (in this case coinciding with the same working position A), and
ii) the first belt structure 4 previously assembled at the first working position A is supported by the first auxiliary drum 19 and is ready to receive a new tread band 5 at the second working position B.

At this point, the method of the invention provides for the step of transferring the substantially cylindrical sleeve from the picking position D of the finishing station 17 at a radially outer position with respect to the carcass structure 3 built in the meantime in the building station 14.

Advantageously, this transfer step is carried out by the substantially ring-shaped transfer device 36 according to methods known *per se* in the art.

After said transfer step, the finishing station 17 is at an operating condition in which the second auxiliary drum 20 is already arranged at the first working position A and ready to support a new belt structure 4 thanks to the operating interaction with the application apparatus 21 arranged at the working position A.

Once the operations described above are carried out, therefore, the finishing station 17 is at an operating conditions totally similar to the starting condition indicated above, except for the fact that the two auxiliary drums 19, 20 have exchanged their position.

At this point, the method of the invention provides for cyclically repeating the steps described above which are adapted to manufacture the substantially cylindrical sleeve including the belt structure 4 and the tread band 5, by assembling a new belt structure 4 on the second auxiliary drum 20 at the first working position A, by applying substantially simultaneously at the second working position B a new tread band 5 at a radially outer position with respect to the belt structure 4 previously assembled on the first auxiliary drum 19, exchanging the place of the two drums at the end of these assembling and application steps, and so on.

At the end of each cyclical repetition of said steps, a new substantially cylindrical sleeve including the belt structure 4 and the tread band 5 is obtained, supported at the picking position D (in this case position A) alternatively by one of the two auxiliary drums 19, 20 of the finishing station 17.

Such sleeve is then transferred from the picking position D of the finishing station 17 at a radially outer position with respect to a new carcass structure 3 built in the building station 14 according to the method described above.

Preferably, the steps of manufacturing the substantially cylindrical sleeve including the tread band 5 and the belt structure 4 and of transferring such sleeve from the picking position D of the finishing station 17 are carried out in a time interval substantially equal to or smaller than, the time for carrying out the step of building the carcass structure 3 in the building station 14.

In this way, it is advantageously possible to manufacture and transfer the substantially cylindrical sleeve including the tread band 5 and the belt structure 4 in the cycle time used to build the carcass structure 3 in the building station 14 optimising the process times and increasing the productivity of the manufacturing plant l.

In a particularly preferred embodiment of the invention, the assembly of the substantially cylindrical sleeve including the tread band 5 and the belt structure 4 with the carcass structure 3 not toroidally shaped yet (otherwise called "carcass sleeve") is carried out on the same primary drum 15 of the building station 14 used for building the carcass sleeve, thus integrating a unistage manufacturing process.

Advantageously, a high quality level of the tyre 2 being manufactured is ensured in this way, thanks to the limited number of operations during the assembly of green semifinished products still in a substantially plastic state. Such semifinished products are thus subjected to a correspondingly limited number of potentially deforming stresses, thus advantageously limiting the risk of undesired structural alterations of the green tyre being manufactured.

Within the framework of said unistage manufacturing process, the transfer device 36 having a substantially annular conformation is operated so as to be placed around the auxiliary drum 19 or 20 arranged at the picking position D for picking up the substantially cylindrical sleeve including the belt structure 4 and the tread band 5 from the same drum. In a way known *per se,* the auxiliary drum 19, 20 disengages said sleeve which is then axially translated by the transfer device 36 to be placed in a coaxially centred position on the primary drum 15 supporting the carcass sleeve.

Alternatively, the assembly of the carcass sleeve with the tread band 5/belt structure 4 sleeve may be carried out on a so-called shaping drum onto which the carcass sleeve and the tread band 5/belt structure 4 sleeve are transferred, to manufacture the tyre according to a so-called "two-stage manufacturing process".

In a preferred embodiment, the method further comprises after said transfer step the step of shaping the substantially cylindrical carcass structure 3 according to a substantially toroidal shape so as to associate the same to the substantially cylindrical sleeve including the tread band 5 and the belt structure 4 transferred at a radially outer position with respect to the carcass structure.

Preferably, this shaping step is carried out by axially moving the annular anchoring structures 7 close to each other and simultaneously admitting fluid under pressure into the assembly consisting of the carcass structure 3 and of the substantially cylindrical sleeve including the tread band 5 and the belt structure 4, so as to place the carcass ply(ies) 10 in contact against the inner surface of the belt structure 4 held by the transfer device 3 6.

In this way, a green tyre is manufactured which can be removed from the primary drum 15 or from the shaping drum to be subjected to a usual vulcanisation step carried out in a vulcanisation station (not shown) of a plant for making a tyre (not shown) comprising the manufacturing plant I described above.

Clearly, the method and the apparatus described above allow to manufacture a tyre 2 having a different structure, for example by applying further layers or elements at the first working position A and/or at the second working position B and/or at the picking position D.

All this can be obtained by positioning at such positions suitable delivery equipment adapted to operatively interact with the auxiliary drums 19, 20 arranged therein by the displacing apparatus 18.

Thus, for example, in an alternative embodiment, the method of the invention may provide for the further step of applying at the picking position D (for example coinciding with the first working position A) at a radially outer position with respect to the belt structure 4 supported by the auxiliary drum 19, 20 arranged therein, an additional first or last continuous elongated element of green elastomeric material according to a respective predetermined path, so as to begin or complete the tread band 5 at the picking position D.

In this case, it is advantageously possible to form the tread band 5 using three different elastomeric materials delivered by the delivery members 25, 26 arranged at the second working position B and by the delivery member arranged at the picking position D of the finishing station 17.

Preferably, this application step is carried out according to the methods described above, that is, by delivering such continuous elongated element by means of an extruder of a further delivery member (not shown) arranged at the picking position D near the auxiliary drum 19, 20 arranged therein and by winding the continuous elongated element on said drum.

Also in this case, such winding is accomplished by carrying out, simultaneously with the application of the continuous elongated element, the steps of:
- imparting to the auxiliary drum 19 or 20 carrying the belt structure 4 a rotary motion about a geometric axis thereof, so as to circumferentially distribute the continuous elongated element at a radially outer position with respect to the belt structure 4;
- carrying out controlled relative displacements between the auxiliary drum 19 or 20 and the delivery member to form with the continuous elongated element a plurality of coils arranged in mutual side by side relationship to define at least one portion of the tread band 5.

Advantageously, this further delivery member may be provided with a respective actuating group (not shown) adapted to move such member to and from the auxiliary drum 19, 20 arranged at the picking position D so as not to interfere with the subsequent picking operations of the substantially cylindrical sleeve including the belt structure 4 and the tread band 5.

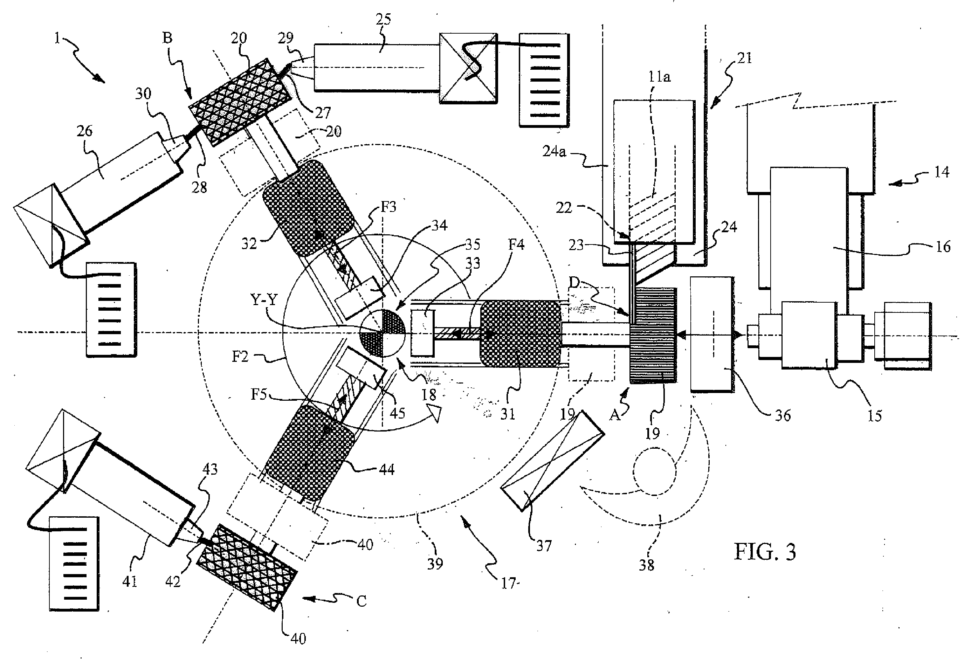

Figure 3 shows a further preferred embodiment of a plant 1 for manufacturing tyres according to the invention.

In the following description and in such Figure, the elements of the plant 1 structurally or functionally equivalent to those illustrated above with reference to the embodiment shown in Figure 1 will be indicated with the same reference numerals and will not be further described.

In the embodiment shown in Figure 3, the plant 1 further comprises at least one third auxiliary drum 40 supported by the displacing apparatus 18 and at least one delivery member 41 of a further continuous elongated element 42 of green elastomeric material arranged at at least one third working position C for operatively interacting with one of the auxiliary drums 19, 20 or 40.

Also in this preferred embodiment, the picking position D of the substantially cylindrical sleeve substantially coincides with the first working position A.

Advantageously, the plant 1 thus structured allows to form the tread band 5 using at least three different elastomeric materials delivered by the delivery members 25 and 26 arranged at the second working position B and by the delivery member 41 arranged at the third working position C of the finishing station 17.

The delivery member 41 preferably comprises at least one extruder 43 in a totally similar way to the delivery members 25, 26.

Similarly to what has been described above, in order to wind the continuous elongated element 42 delivered by the extruder 43 at a radially outer position with respect to the belt structure 4 supported by the third auxiliary drum 40, the displacing apparatus 18 preferably comprises a drum rotation unit 44 adapted to rotate the auxiliary drum 40 about its geometrical axis.

In this way, it is advantageously possible to carry out, in an effective manner, a controlled deposition of the continuous elongated element 42 at a radially outer position with respect to the belt structure 4 supported by the third auxiliary drum 40.

Also in this preferred embodiment, the displacing apparatus 18 is of the substantially turret-like type and is adapted to support the auxiliary drums 19, 20 and 40 at positions angularly offset with each other; in this case, however, the auxiliary drums are angularly offset by an angle equal to about 120°.

Similarly to what has been described above, the displacing apparatus 18 comprises one drum translating unit 45 - preferably of a type similar to the translating units 33 and 34 - adapted to determine controlled axial movements of the auxiliary drum 40 at the working positions A, B, C or at the picking position D of the substantially cylindrical sleeve including the belt structure 4 and the tread band 5 manufactured in the finishing station 17.

Preferably, the drum translating unit 45 causes controlled axial movements not just of the auxiliary drum 40 but also of the relevant rotation unit 44.

Also in this case, the drum translating unit 45 of the displacing apparatus 18 moves the auxiliary drum 40 between the working positions A, B, C or the picking position D and a stand-by position defined between said positions and the rotation axis Y-Y of the displacing apparatus 18.

Preferably, the stand-by positions of the auxiliary drums 19, 20 and 40 are defined within the outer perimeter of the rotatable supporting platform 39, schematically indicated with a dashed line in Figure 3, which can be of circular type.

Clearly, the rotatable supporting platform 39 can have any suitable shape different from the circular one, in which case the stand-by positions of the auxiliary drums 19, 20 and 40 are preferably defined within an area - such as that schematically indicated with a dashed line in Figure 3 - sufficiently spaced apart from the control unit 37 and from the working position of the operator 38.

Preferably, also the drum translating unit 45 moves the auxiliary drum 40 along a radial direction passing through the rotation axis Y-Y of the displacing apparatus 18 as illustrated by the double arrow F5 in Figure 3.

The drum translating units 33, 34 and 45 thus allow to achieve the advantageous technical effects mentioned above with reference to the previous embodiment of the manufacturing plant 1.

In a further preferred embodiment, not shown, the plant 1 can further comprise at least two delivery members of respective continuous elongated elements of green elastomeric material arranged at the third working position C for operatively interacting at opposite sides of the auxiliary drum 19, 20 or 40 arranged therein by the displacing apparatus 18.

This further embodiment allows to form the tread band 5 using up to four different elastomeric materials increasing the operating/technological flexibility of the plant and the application possibilities of the method implemented by the same.

In a further preferred alternative embodiment, not shown for simplicity, the plant 1 may further comprise a delivery member of a respective continuous elongated element of green elastomeric material arranged at the picking position D of the substantially cylindrical sleeve manufactured in the finishing station 17 for operatively interacting with the drum 19, 20 or 40 positioned therein by the displacing apparatus 18.

In this case, the plant 1 allows to apply the tread band 5 both at the second and at the third working position B and C, and at the picking position D of the substantially cylindrical sleeve, wherever this is required to meet specific application requirements.

This further embodiment allows to form the tread band 5 using up to five different elastomeric materials, further increasing the operating/technological flexibility of the plant and the application possibilities of the method implemented by the same.

With reference to the plant 3 described above, a further preferred embodiment of a method according to the invention for manufacturing tyres for vehicle wheels will now be described.

In particular, the method will be illustrated with reference to a steady-state working condition, as illustrated in Figure 3, wherein the auxiliary drum 19 is at the first working position A and does not support any semifinished product, the second auxiliary drum 20 is at the second working position B and supports a second belt structure 4 assembled on said drum in a previous step of the method and the third auxiliary drum 40 is at the third working position C and supports an assembly of semifinished products comprising a third belt structure 4 and at least one portion of the tread band 5 applied at a radially outer position with respect to the third belt structure 4 in a previous step of the method.

In this alternative embodiment, the method differs from the embodiment illustrated before essentially as regards the application step of the tread band 5 which can be carried out at the working positions B, C and optionally also at the picking position D (in this preferred case substantially coinciding with the first working position A) of the substantially cylindrical sleeve made in the finishing station 17.

The step of building the substantially cylindrical carcass structure 3 (or carcass sleeve) in the building station 14 and the step of assembling the belt structure 4 on the first auxiliary drum 19 arranged at the first working position A, are carried out similarly to the operating steps described above with reference to the previous embodiment implemented by means of the embodiment of the plant 1 illustrated in Figure 1.

In the further alternative embodiment considered herein, the tread band 5 is applied at the working positions B and C and optionally at the picking position D, at a radially outer position with respect to the second belt structure 4 supported by the second auxiliary drum 20 at the second working position B and, respectively, at a radially outer position with respect to the third belt structure 4 supported by the third auxiliary drum 40 at the third working position C or, optionally, at the picking position D.

More particularly, in this alternative embodiment the manufacturing method provides for the steps of:
- applying at least one first portion of the tread band 5 at the second working position B at a radially outer position with respect to the second belt structure 4 previously assembled on the second auxiliary drum 20 of the finishing station 17; in particular, this application step is carried out by laying down according to a predetermined path at least one continuous elongated element - preferably two continuous elongated elements 27, 28 - of green elastomeric material at a radially outer position with respect to the second belt structure 4;
- applying at least one second portion of the tread band 5 at the third working position C at a radially outer position with respect to the third belt structure 4 previously assembled on the third auxiliary drum 40 of the finishing station 17; in particular, this application step is carried out by laying down according to a predetermined path at least one continuous elongated element of green elastomeric material at a radially outer position with respect to the third belt structure 4.

In this preferred embodiment of the method of the invention, this last operating step is therefore carried out by delivering the continuous elongated element 42 from the respective delivery member 41 arranged at the third working position C near the third auxiliary drum 40, simultaneously with winding of the continuous elongated element 42 on said drum.

The deposition of the continuous elongated elements 27, 28 and 42 is advantageously carried out at said working positions B and C according to the preferred ways described above, that is, by imparting a rotation and a translation motion to the auxiliary drums 20 and 40, so as to carry out controlled relative movements between such drums and the delivery members 25, 26 and 41.

Preferably, these rotating and translating motions of the auxiliary drums 20 and 40 are carried out by the displacing apparatus 18, more in particular by the drum rotation units 32 and 44 and, respectively, by the drum translating units 34 and 45 of such apparatus.

In this preferred embodiment of the method of the invention and thanks to the delivery of at least three continuous elongated elements 27, 28 and 42, it is advantageously possible to further increase the flexibility of production of the tread band 5 so as to achieve the desired performance of the tyre 2.

Thus, for example, it is advantageously possible to form - in a preferred alternative embodiment - a tread band 5 including a pair of radially superposed layers, respectively inner and outer, according to a configuration known in the art with the term of *"cap-and*-*base*".

According to this preferred embodiment, the application step of the tread band 5 is carried out at the second working position B by laying down one of said continuous elongated elements, for example the continuous elongated element 27, at a radially outer position with respect to the second belt structure 4 supported by the second auxiliary drum 20 along substantially its entire transversal development so as to form a radially inner layer of the tread band 5.

Afterwards, the application step of the tread band 5 provides for laying down the second continuous elongated element 28 at a radially outer position with respect to at least one portion of the radially inner layer of the tread band 5 thus formed, so as to form a corresponding first portion of a radially outer layer of the tread band 5.

In this preferred embodiment, therefore, the laying down of the continuous elongated elements 27, 28 according to contiguous circumferential coils axially arranged side by side and/or radially superposed is carried out in two consecutive steps.

Within the framework of this embodiment, the method thus provides for applying at least one second portion of a radially outer layer of the tread band 5 at the third working position, by laying down at said third working position C the third continuous elongated element 42 at a radially outer position with respect to a remaining portion of the radially inner layer of the tread band 5, more precisely at an axially aligned position with said first portion of the radially outer layer of the tread band 5 formed by the aforementioned second continuous elongated element 28, so as to form said second portion of the radially outer layer of the tread band 5.

In this way, it is possible to form a tread band 5 of the *"cap-and-base"* type provided with a radially outer layer including two or more axially aligned sectors having specific mechanical characteristics according to a configuration which allows to achieve a plurality of advantageous technical effects, such as for example an improved resistance to the transversal stresses acting on the tread band 5 during use of the tyre 2, or the possibility of keeping the grip performance of the tyre 2 substantially constant as the tread band 2 wears out.

In a further preferred alternative embodiment it is also advantageously possible to form a tread band 5 provided with a radially inner layer including two or more axially aligned sectors having different mechanical characteristics.

According to this preferred alternative embodiment, the application step of the tread band 5 is carried out at the second working position B by laying down one of the above continuous elongated elements, for example the continuous elongated element 27, at a radially outer position with respect to at least one portion of the second belt structure 4 supported by the second auxiliary drum 20, so as to form at least one first portion of a radially inner layer of the tread band 5.

Afterwards, the application step of the tread band 5 provides for laying down the second continuous elongated element 28 - again at the second working position B - at a radially outer position with respect to said second belt structure 4, and more precisely at an axially aligned position with respect to said first portion, so as to form at least one second portion of the radially inner layer of the tread band.

In this way, it is possible to form a tread band 5 provided with a radially inner layer having at least two axially aligned portions or sectors having different mechanical and chemical-physical characteristics.

In this preferred alternative embodiment, the laying down of the continuous elongated elements 27, 28 can be carried out at the second working position B either in successive steps or at least in part simultaneously.

Afterwards, the application step of the tread band 5 provides for laying down at the third working position C the third continuous elongated element 42 at a radially outer position with respect to the radially inner layer having a plurality of axially aligned sectors of the tread band 5 by substantially the entire transversal development of such layer, so as to form a radially outer layer of the tread band 5.

In a further alternative embodiment, it is possible to form a radially outer layer of the tread band 5 including two or more axially aligned portions or sectors, similarly to what has been described above, by providing at least one further delivery member of a respective continuous elongated element arranged at the third working position C of the finishing station 17 and adapted to operatively interact with the third auxiliary drum 40.

In this way, it is possible to lay down the continuous elongated element 42 at a radially outer position with respect to at least one portion of the radially inner layer of the tread band 5 supported by the third auxiliary drum 40, so as to form at least one first portion of the radially outer layer of the tread band 5.

Afterwards, the application step of the tread band 5 provides for laying down this further continuous elongated element, always in the third working position C, at a radially outer position with respect to at least one remaining portion of the radially inner layer of the tread band 5, more precisely at an axially aligned position with respect to said first portion of the radially outer layer of the tread band 5 formed by the third continuous elongated element 42, so as to form at least one second portion of the radially outer layer of the tread band 5.

Once said steps of assembling the first belt structure 4 on the first auxiliary drum 19 and of applying the tread band 5 at a radially outer position with respect to the second and third belt structures 4 previously assembled on the auxiliary drums 20 and 40 have been completed, the method of the invention provides for carrying out the steps of:
- positioning the first auxiliary drum 19 supporting the first belt structure 4 at the second working position B,
- positioning the second auxiliary drum 20 supporting the second belt structure 4 and at least one portion of the tread band 5 at the third working position C, and
- positioning the third auxiliary drum 40 supporting the substantially cylindrical sleeve, including the tread band 5 applied at a radially outer position with respect to the third belt structure 4, at the picking position D of the finishing station 17.

As described above, in the preferred embodiment described with reference to the plant 1 of Figure 3, the picking position D of the substantially cylindrical sleeve thus manufactured substantially coincides with the first working position A.

According to the method of the invention, the aforementioned steps of positioning the auxiliary drums 19, 20 and 40 respectively: at the second working position B, at the third working position C and at the picking position D, are carried out at least in part simultaneously with each other.

In particular, such steps are preferably carried out by means of the displacing apparatus 18 by rotating the same about the substantially vertical rotation axis Y-Y by means of the driving unit 35, similarly to what has been described with reference to the previous embodiments of the method and of the plant 1 according to the invention.

In this preferred embodiment, the auxiliary drums 19, 20 and 40 are effectively moved in a substantially simultaneous manner by rotating the displacing apparatus 18 about the rotation axis Y-Y, preferably according to a single direction, for example the counter clockwise one indicated by arrow F2 in Figure 3.

In a preferred embodiment and thanks to the fact that the auxiliary drums 19, 20 and 40 are slidably supported by the displacing apparatus 18, the method of the invention comprises also in this case the further step of translating the auxiliary drums 19, 20 and 40 towards the rotation axis Y-Y of the displacing apparatus 18 before carrying out the rotation step of such apparatus.

Also in this case, said step is preferably carried out by the drum translating units 33, 34 and 45 by translating both the auxiliary drums 19, 20 and 40 and the relevant rotation units 31, 32 and 44, which are preferably translationally integral with the drums.

In this way, it is advantageously possible to decrease both the transversal dimensions and the inertia forces during the movements of the auxiliary drums 19, 20 and 40 between the working positions A, B and C with an increase of the safety features of the plant 1 and with a reduction of the driving force required to the driving unit 35 for rotating the displacing apparatus 18.

Preferably, the auxiliary drums 19, 20 and 40 and the corresponding rotation units 31, 32 and 44 are translated towards the rotation axis Y-Y of the displacing apparatus 18 and are arranged at the aforementioned stand-by positions defined inside the outer perimeter of the rotatable supporting platform 39 of such apparatus.

Advantageously, the auxiliary drums 19, 20 and 40 of the displacing apparatus 18 are arranged in this case at a safe distance from both the control unit 37 and from the operator 38 during the rotation of the displacing apparatus 18, as schematically illustrated in dotted line in Figure 3.

Once said substantially simultaneous steps of positioning the first auxiliary drum 19 at the second working position B, the second auxiliary drum 20 at the third working position C and the third auxiliary drum at the picking position D (the first working position A) have been carried out, the finishing station 17 is in an operating condition in which:
i) a substantially cylindrical sleeve including the third belt structure 4 and the tread band 5 ready to be removed from the third auxiliary drum 40 is arranged at the picking position D (the same working position A), and is supported by the third auxiliary drum 40;
ii) the first belt structure 4 previously assembled at the first working position A is supported by the first auxiliary drum 19 and is ready to receive at least one portion of a new tread band 5 at the second working position B; and
iii) a semifinished product including the second belt structure 4 previously assembled at the first working position A and a portion of the tread band 5 previously applied at the second working position B, is supported by the second auxiliary drum 20 and is ready to receive the remaining portion (or a further portion) of the tread band 5 at the third working position C.

At this point, the method of the invention provides for the step of transferring the substantially cylindrical sleeve supported by the third auxiliary drum 40 from the picking position D of the finishing station 17 at a radially outer position with respect to the carcass structure 3 built in the meantime in the building station 14.

Advantageously, this transfer step is carried out by the substantially ring-shaped transfer device 36 according to the methods described above.

After this transfer step, the finishing station 17 is in an operating condition wherein the third auxiliary drum 40 is already arranged at the first working position A and is ready to support a new belt structure 4 thanks to the operating interaction with the application apparatus 21 arranged at such a working position A.

At this point, the method of the invention provides for carrying out at least in part simultaneously the steps of:
- assembling a new belt structure 4 at the first working position A on the third auxiliary drum 40,
- applying at least one first portion of the tread band 5 at the second working position B at a radially outer position with respect to the first belt structure 4 previously assembled on the first auxiliary drum 19; and
- applying at least one second portion of the tread band 5 at the third working position C at a radially outer position with respect to the second belt structure 4 assembled on the auxiliary drum 20.

Once said steps have been carried out, the method of the invention provides for carrying out at least in part simultaneously the steps of positioning the third auxiliary drum 40 supporting the new belt structure 4 at the second working position B, of positioning the first auxiliary drum 19 supporting the first belt structure and at least one first portion of the tread band 5 at the third working position C and of positioning the second auxiliary drum 20 supporting the substantially cylindrical sleeve, including the tread band 5 applied at a radially outer position with respect to the second belt structure 4, at the picking position D of the finishing station 17.

At this point, the method of the invention provides for the step of transferring the new substantially cylindrical sleeve just manufactured and supported by the second auxiliary drum 20 from the picking position D of the finishing station 17 at a radially outer position with respect to a new carcass structure 3 built in the meantime in the building station 14.

After this transfer step, the finishing station 17 is in an operating condition wherein the second auxiliary drum 20 is already arranged at the first working position A and ready to support a new belt structure 4 thanks to the operating interaction with the application apparatus 21 arranged at such a working position A.

At this point, the method of the invention provides for carrying out at least in part simultaneously the steps of:
- assembling a new belt structure 4 at the first working position A on the second auxiliary drum 20,
- applying at least one first portion of the tread band 5 at the second working position B at a radially outer position with respect to the belt structure 4 previously assembled on the third auxiliary drum 40; and
- applying at least one second portion of the tread band 5 at the third working position C at a radially outer position with respect to the first belt structure 4 assembled on the first auxiliary drum 19.

Once the aforementioned steps have been carried out, the method of the invention provides for carrying out at least in part simultaneously the steps of positioning the second auxiliary drum 20 supporting the new belt structure 4 at the second working position B, of positioning the third auxiliary drum 40 supporting the belt structure 4 previously assembled and at least one first portion of the tread band 5 at the third working position C and of positioning the first auxiliary drum 19 supporting the substantially cylindrical sleeve, including the tread band 5 applied at a radially outer position with respect to the first belt structure 4, at the picking position D of the finishing station 17.

At this point, the method of the invention provides for the step of transferring the substantially cylindrical sleeve supported by the first auxiliary drum 19 from the picking position D of the finishing station 17 at a radially outer position with respect to a new carcass structure 3 built in the meantime in the building station 14.

Once the operations described above have been completed, the finishing station 17 returns to the initial operating condition indicated above.

At the end of each cyclical repetition of the aforementioned steps of assembling the belt structure 4/applying portions of the tread band 5 and of rotating the displacing apparatus 18, a new substantially cylindrical sleeve including the belt structure 4 and the tread band 5, supported at the picking position D (in this case the working position A) by one of the auxiliary drums 19, 20 and 40 of the finishing station 17, is manufactured.

Such sleeve is then transferred from the picking position D of the finishing station 17 at a radially outer position with respect to a new carcass structure 3 built in the building station 14 according to the method described above.

Also in this alternative embodiment, the steps of manufacturing the substantially cylindrical sleeve including the tread band 5 and the belt structure 4 and of transferring such sleeve from the picking position D of the finishing station 17 are preferably carried out in a time interval substantially equal to or smaller than, the time for carrying out the step of building the carcass structure 3 in the building station 14.

In this way, it is advantageously possible to optimise the process times and correspondingly increase the productivity of the manufacturing plant 1.

Also in this alternative embodiment, the assembly of the substantially cylindrical sleeve including the tread band 5 and the belt structure 4 with the carcass structure 3 not toroidally shaped yet (otherwise called "carcass sleeve") is preferably carried out on the same primary drum 15 of the building station 14 used for building the carcass sleeve, thus integrating a unistage manufacturing process.

In a further alternative embodiment, the method of the invention may provide for the step of applying at the picking position D (for example coinciding with the first working position A) at a radially outer position with respect to the belt structure 4 supported by the auxiliary drum 19, 20 or 40 arranged therein, an additional first or last continuous elongated element of green elastomeric material according to a respective predetermined path, so as to begin or complete the tread band 5 at the picking position D.

In this case, it is advantageously possible to form the tread band 5 using four or five different elastomeric materials delivered by the delivery members 25, 26 arranged at the second working position B and by one or two delivery members arranged at the third working position C and by a delivery member arranged at the picking position D of the finishing station 17.

Preferably, this application step is carried out according to the methods described above, that is, by delivering such continuous elongated element by an extruder of a further delivery member (not shown) arranged at the picking position D (for example coinciding with the first working position A) near the auxiliary drum 19, 20 or 40 arranged therein and by winding the continuous elongated element on said drum as illustrated above.

Advantageously, this further delivery member may be provided with a respective actuating group (not shown) adapted to move such member to and from the auxiliary drum arranged at the picking position D (for example coinciding with the first working position A), so as to not interfere with the subsequent picking operations of the substantially cylindrical sleeve including the belt structure 4 and the tread band 5.

From repeated tests carried out by the Applicant, it has been found that the manufacturing method and apparatus according to the invention, in their possible alternative embodiments, fully achieve the object of manufacturing a high quality tyre reconciling the different productivity rates of the building station of the carcass structure and of the finishing station intended to manufacture the substantially cylindrical sleeve including a belt structure provided with a layer of zero-degree reinforcing cords and a tread band formed by winding coils of at least one continuous elongated element.

In addition, it should be noted that the method according to the invention achieves the aforementioned object thanks to a sequence of operating steps that can be carried out by a structurally simple and easy to manage manufacturing plant.

Advantageously, the manufacturing plant of the invention can be arranged downstream of an existing station for building the carcass structures, thus increasing the productivity of the tyre manufacturing plant which incorporates the same.

Advantageously, moreover, the assembly of the carcass sleeve with the outer belt structure/tread band sleeve can be carried out on the same drum used for building the carcass sleeve, integrating a unistage manufacturing process which makes it possible to maximise the productivity of the manufacturing plant and the quality characteristics of the tyres manufactured by the same.

Finally, it should be observed that the number of auxiliary drums and of the working positions defined in the finishing station 17 can be higher than three depending upon specific application requirements.

In this case, the auxiliary drums will be preferably supported by the displacing apparatus 18 at positions angularly offset with each other by an angle substantially equal to about 360°/n where n is the total number of auxiliary drums.

In this case, the plant 1 comprises a suitable number of application apparatuses 21 of the belt layers and/or of delivery members of respective continuous elongated elements arranged at the working positions defined in the finishing station 17 for operatively interacting with the auxiliary drums arranged therein by the displacing apparatus 18.

## Claims

1. A method for manufacturing tyres for vehicle wheels, comprising the steps of:
a) building in a building station (14) a substantially cylindrical carcass structure (3) comprising at least one carcass ply (10) operatively associated to annular anchoring structures (7) axially spaced apart from each other;
b) manufacturing in a finishing station (17) a substantially cylindrical sleeve comprising a tread band (5) applied at a radially outer position with respect to a belt structure (4) comprising at least one belt layer (12) including reinforcing cords substantially parallel to a circumferential development direction of the sleeve, said finishing station (17) comprising a displacing apparatus (18) adapted to support a first auxiliary drum (19) and a second auxiliary drum (20) and to position said auxiliary drums (19, 20) at a plurality of working positions at which the operating steps required for manufacturing the substantially cylindrical sleeve are carried out, said step b) comprising the steps of:
b1) assembling a first belt structure (4) at a first working position (A) on said first auxiliary drum (19) of the finishing station (17);
b2) applying a tread band (5) at at least one second working position (B) at a radially outer position with respect to a second belt structure (4) previously assembled on said second auxiliary drum (20) of the finishing station (17), said application step being carried out by laying down according to a predetermined path at least one continuous elongated element (27, 28) of green elastomeric material at a radially outer position with respect to said second belt structure (4);
b3) positioning the first auxiliary drum (19) supporting the first belt structure (4) at said at least one second working position (B);
b4) positioning said second auxiliary drum (20) supporting the substantially cylindrical sleeve thus obtained at a picking position (D) of the finishing station (17);
c) transferring said substantially cylindrical sleeve from said picking position of the finishing station (17) at a radially outer position with respect to a carcass structure (3) built in the meantime in the building station (14);
wherein said first (19) and second (20) auxiliary drums are slidably supported by the displacing apparatus (18);
wherein said steps from b1) to b4) are repeated cyclically;
wherein steps b1) and b2) are carried out at least in part simultaneously with one another; and
wherein steps b3) and b4) are carried out at least in part simultaneously with one another.

2. A method according to claim 1, wherein said step b) of manufacturing the substantially cylindrical sleeve is carried out by means of the steps of:
b1) assembling at a first working position (A) a first belt structure (4) on said first auxiliary drum (19) of the finishing station (17);
b2) applying at a second working position (B) at least one first portion of the tread band (5) at a radially outer position with respect to a second belt structure (4) previously assembled on said second auxiliary drum (20) of the finishing station (17); said application step being carried out by laying down according to a predetermined path at least one continuous elongated element (27, 28) of green elastomeric material at a radially outer position with respect to said second belt structure (4);
b5) applying at at least one third working position (C) at least one second portion of the tread band (5) at a radially outer position with respect to a third belt structure (4) assembled on at least one third auxiliary drum (40) of the finishing station (17); said application step being carried out by laying down according to a predetermined path at least one continuous elongated element (42) of green elastomeric material at a radially outer position with respect to said third belt structure (4);
b6) positioning the first auxiliary drum (19) supporting the first belt structure (4) at said second working position (B);
b7) positioning the second auxiliary drum (20) supporting the second belt structure (4) and said at least one portion of the tread band (5) at said third working position (C);
b8) positioning said at least one third auxiliary drum (40) supporting the substantially cylindrical sleeve thus obtained at a picking position (D) of the finishing station (17);
wherein said steps b1), b2) and from b5) to b8) are repeated cyclically;
wherein steps b1), b2) and b5) are carried out at least in part simultaneously with one another; and
wherein steps from b6) to b8) are carried out at least in part simultaneously with one another.

3. A method according to any one of claims 1 or 2, wherein said step b1) comprises the step of
i) applying at a radially outer position with respect to the first auxiliary drum (19) one strip-like element (23) of green elastomeric material including at least one reinforcing cord to form axially contiguous circumferential coils, so as to obtain said belt layer (12) including reinforcing cords substantially parallel to the circumferential development direction of the sleeve.

4. A method according to any one of claims 1 or 2, wherein said step b2) or, respectively, said steps b2) and b5), are carried out by delivering said continuous elongated elements (27, 28, 42) from respective delivery members (25, 26, 41) arranged at said at least one second (B) or at said second (B) and at said at least one third (C) working position near said second (20) or said second (20) and said at least one third (40) auxiliary drum respectively, simultaneously with winding of the continuous elongated elements (27, 28, 41) on said drums (20, 40).

5. A method according to claim 1, wherein said step b) further comprises the step of
b9) applying according to a respective predetermined path a further continuous elongated element of green elastomeric material at said picking position (D) at a radially outer position with respect to said second belt structure (4).

6. A method according to claim 2, wherein said step b) further comprises the step of
b10) applying according to a respective predetermined path a further continuous elongated element of green elastomeric material at said picking position (D) at a radially outer position with respect to said third belt structure (4).

7. A method according to claim 4, wherein said step b2) is effected by carrying out, simultaneously with the application of said at least one continuous elongated element (27, 28, 42), the steps of:
d) imparting to said second auxiliary drum (20) carrying the second belt structure (4) a rotary motion about a geometric axis thereof, so as to circumferentially distribute said at least one continuous elongated element (27, 28, 42) at a radially outer position with respect to the second belt structure (4);
e) carrying out controlled relative displacements between said second auxiliary drum (20) and the delivery member (25, 26, 41) to form with said at least one continuous elongated element (27, 28, 42) a plurality of coils arranged in mutual side by side relationship to define said at least one portion of the tread band (5).

8. A method according to claim 4, wherein said step b5) is effected by carrying out, simultaneously with the application of said at least one continuous elongated element the steps of:
d') imparting to said at least one third auxiliary drum (40) carrying the third belt structure (4) a rotary motion about a geometric axis thereof, so as to circumferentially distribute said at least one continuous elongated element at a radially outer position with respect to the third belt structure (4);
e') carrying out controlled relative displacements between said at least one third auxiliary drum (40) and the delivery member to form with said at least one continuous elongated element a plurality of coils arranged in mutual side by side relationship to define at least one radially outer portion of the tread band (5).

9. A method according to claim 7, wherein said displacements are carried out by moving the second auxiliary drum (20) with respect to said delivery member (25, 26, 41).

10. A method according to claim 8, wherein said displacements are carried out by moving the third auxiliary drum (40) with respect to said delivery member (25, 26, 41).

11. A method according to any one of claims 7 or 8, wherein said steps d), e), d') and e') are carried out by a displacing apparatus (18) active on said second (20) or, respectively, on said second (20) and said at least one third (40) auxiliary drum.

12. A method according to any one of claims 1 or 2, wherein said working positions (A, B, C) of the finishing station (17) are angularly offset with one another.

13. A method according to any one of claims 11 or 12, wherein said auxiliary drums (19, 20, 40) are supported by a substantially turret-like displacing apparatus (18) at positions angularly offset with one another and wherein said steps b3) and b4) or from b6) to b8) are carried out by rotating said displacing apparatus (18) about a substantially vertical rotation axis (Y-Y).

14. A method according to claim 13, wherein at least one of said auxiliary drums (19, 20, 40) is slidably supported by said displacing apparatus (18) and wherein the method comprises the further step of translating said at least one auxiliary drum (19, 20, 40) towards the rotation axis (Y-Y) of the displacing apparatus (18) before carrying out said rotation step of said apparatus (18).

15. A method according to any one of claims 1 or 2, wherein the picking position (D) of the cylindrical sleeve substantially coincides with said first working position (A).

16. A method according to claim 4, wherein the delivery of at least one of said continuous elongated elements (27, 28) is carried out by delivering at least one semifinished product of green elastomeric material in the form of a continuous strip by means of at least one of said delivery members (25, 26).

17. A plant (1) for manufacturing tyres for vehicle wheels comprising:
a) a building station (14) for building a substantially cylindrical carcass structure (3) comprising at least one carcass ply (10) operatively associated to annular anchoring structures (7) axially spaced apart from each other;
b) a finishing station (17) for manufacturing a substantially cylindrical sleeve comprising a tread band (5) applied at a radially outer position with respect to a belt structure (4) comprising at least one belt layer (12) including reinforcing cords substantially parallel to the circumferential development direction of the sleeve, said finishing station (17) comprising:
b1) a first auxiliary drum (19);
b2) at least one second auxiliary drum (20);
b3) a displacing apparatus (18) adapted to support said auxiliary drums (19, 20) and to position said auxiliary drums (19, 20) at a first working position (A) wherein said belt structure (4) is assembled, at at least one second working position (B) wherein said tread band (5) is applied and at a picking position (D) of said substantially cylindrical sleeve; said first (A) and said at least one second (B) working position being defined in different zones of the finishing station (17);
b4) at least one delivery device (22) of a strip-like element (23) of green elastomeric material including at least one reinforcing cord, arranged at said first working position (A) for operatively interacting with one of said auxiliary drums (19, 20);
b5) at least one delivery member (25, 26) of a continuous elongated element (27, 28) of green elastomeric material arranged at said at least one second working position (B) for operatively interacting with one of said auxiliary drums (19, 20);
said first (19) and at least one second (20) auxiliary drums being slidably supported by the displacing apparatus (18);
c) at least one transfer device (36) of the substantially cylindrical sleeve manufactured in the finishing station (17), adapted to operatively interact with one of said auxiliary drums (19, 20) at said picking position (D) for transferring said substantially cylindrical sleeve at a radially outer position with respect to a carcass structure (3) built in the building station (14).

18. A plant (1) according to claim 17, further comprising:
b6) at least one third auxiliary drum (40) supported by said displacing apparatus (18);
b7) at least one second delivery member (41) of a continuous elongated element (42) of green elastomeric material arranged at at least one third working position (C) for operatively interacting with one of said auxiliary drums (19, 20, 40).

19. A plant (1) according to any one of claims 17 or 18, wherein said displacing apparatus (18) comprises at least one drum rotation unit (31, 32, 44) adapted to rotate the auxiliary drums (19, 20, 40) about their geometrical axis.

20. A plant (1) according to claim 18, wherein said at least one third auxiliary drum (40) is slidably supported by said displacing apparatus (18).

21. A plant (1) according to any one of claims 17 or 18, wherein said displacing apparatus (18) comprises at least one drum translating unit (33, 34, 45) adapted to carry out controlled axial movements of said auxiliary drums (19, 20, 40) at said working positions (A, B, C) or at said picking position (D).

22. A plant (1) according to any one of claims 17 or 18, wherein said displacing apparatus (18) is of the substantially turret-like type and is adapted to support said auxiliary drums (19, 20, 40) at positions angularly offset with one another.

23. A plant (1) according to claim 22, further comprising at least one driving unit (35) adapted to rotate said displacing apparatus (18) about a substantially vertical rotation axis (Y-Y).

24. A plant (1) according to claims 21 and 22, wherein said drum translating unit (33, 34, 35) of the displacing apparatus (18) translates said auxiliary drums (19, 20, 40) between said working positions (A, B, C) or said picking position (D) and a stand-by position defined between said working positions (A, B, C) or picking position (D) and a rotation axis (Y-Y) of the displacing apparatus (18).

25. A plant for making tyres for vehicle wheels, comprising a manufacturing plant (1) according to any one of claims from 17 to 24 and at least one vulcanisation station for vulcanising the tyres manufactured in said manufacturing plant (1).

## Patentansprüche

1. Verfahren zur Herstellung von Reifen für Fahrzeugräder, wobei das Verfahren folgende Schritte umfasst:
a) Fertigen, in einer Fertigungsstation (14), einer im Wesentlichen zylindrischen Karkassenstruktur (3), umfassend zumindest eine Karkassenlage (10), die operativ ringförmigen Verankerungsstrukturen (7) zugeordnet ist, die axial voneinander beabstandet sind;
b) Herstellen, in einer Endfertigungsstation (17), einer im Wesentlichen zylindrischen Hülse umfassend einen Laufflächenring (5), der in einer radial äußeren Position in Bezug auf eine Gürtelstruktur (4) aufgebracht ist, die zumindest eine Gürtellage (12) mit Verstärkungsdrähten umfasst, die im Wesentlichen parallel zu einer Umfangsrichtung der Hülse sind, wobei die Endfertigungsstation (7) eine Verschiebevorrichtung (18) umfasst, die dazu geeignet ist, eine erste Hilfstrommel (19) und eine zweite Hilfstrommel (20) zu tragen, und die Hilfstrommeln (19, 20) an einer Vielzahl von Arbeitspositionen zu positionieren, an denen die zur Herstellung der im Wesentlichen zylindrischen Hülse erforderlichen Arbeitsschritte ausgeführt werden, wobei Schritt b) die folgenden Schritte umfasst:
b1) Zusammenbauen einer ersten Gürtelstruktur (4) an einer ersten Arbeitsposition (A) an der ersten Hilfstrommel (19) der Endfertigungsstation (17);
b2) Anbringen eines Laufflächenrings (5) an zumindest einer zweiten Arbeitsposition (B) an einer radial äußeren Position in Bezug auf eine zweite Gürtelstruktur (4), die zuvor an der zweiten Hilfstrommel (20) der Endfertigungsstation (17) zusammengebaut wurde, wobei der Schritt des Anbringens ausgeführt wird, indem entlang eines vorbestimmten Pfads zumindest ein durchgehendes längliches Element (27, 28) aus rohem Elastomermaterial an einer radial äußeren Position in Bezug auf die zweite Gürtelstruktur (4) abgelegt wird;
b3) Positionieren der ersten Hilfstrommel (19), die die erste Gürtelstruktur (4) trägt, an der zumindest einen zweiten Arbeitsposition (B);
b4) Positionieren der zweiten Hilfstrommel (20), die die so erhaltene, im Wesentlichen zylindrische Hülse trägt, an einer Aufnahmeposition (D) der Endfertigungsstation (17);
c) Übertragen der im Wesentlichen zylindrischen Hülse von der Aufnahmeposition der Endfertigungsstation (17) an eine radial äußere Position in Bezug auf eine Karkassenstruktur (3), die in der Zwischenzeit in der Fertigungsstation (14) gefertigt wurde;
wobei die erste (19) und die zweite (20) Hilfstrommel verschiebbar durch die Verschiebevorrichtung (18) getragen werden;
wobei die Schritte von b1) bis b4) zyklisch wiederholt werden;
wobei die Schritte b1) und b2) zumindest teilweise gleichzeitig ausgeführt werden; und
wobei die Schritte b3) und b4) zumindest teilweise gleichzeitig ausgeführt werden.

2. Verfahren nach Anspruch 1, wobei der Schritt b) zur Herstellung der im Wesentlichen zylindrischen Hülse mittels der folgenden Schritte ausgeführt wird:
b1) Zusammenbauen, an einer ersten Arbeitsposition (A), einer ersten Gürtelstruktur (4) an der ersten Hilfstrommel (19) der Endfertigungsstation (17);
b2) Anbringen, an einer zweiten Arbeitsposition (B), zumindest eines ersten Abschnitts des Laufflächenrings (5) an einer radial äußeren Position in Bezug auf eine zweite Gürtelstruktur (4), die zuvor an der zweiten Hilfstrommel (20) der Endfertigungsstation (17) zusammengebaut wurde; wobei der Schritt des Anbringens ausgeführt wird, indem entlang eines vorbestimmten Pfads zumindest ein durchgehendes längliches Element (27, 28) aus rohem Elastomermaterial an einer radial äußeren Position in Bezug auf die zweite Gürtelstruktur (4) abgelegt wird (4);
b5) Anbringen, an zumindest einer dritten Arbeitsposition (C), zumindest eines zweiten Abschnitts des Laufflächenrings (5) an einer radial äußeren Position in Bezug auf eine dritte Gürtelstruktur (4), die an zumindest einer dritten Hilfstrommel (40) der Fertigungsstation (17) zusammengebaut wurde; wobei der Schritt des Anbringens ausgeführt wird, indem entlang eines vorbestimmten Pfads zumindest ein durchgehendes längliches Element (42) aus rohem Elastomermaterial an einer radial äußeren Position in Bezug auf die dritte Gürtelstruktur (4) abgelegt wird;
b6) Positionieren der ersten Hilfstrommel (19), die die erste Gürtelstruktur (4) trägt, an der zweiten Arbeitsposition (B);
b7) Positionieren der zweiten Hilfstrommel (20), die die zweite Gürtelstruktur (4) trägt, und des zumindest einen Abschnitts des Laufflächenrings (5) an der dritten Arbeitsposition (C);
b8) Positionieren der zumindest einen dritten Hilfstrommel (40), die die so erhaltene, im Wesentlichen zylindrische Hülse trägt, an einer Aufnahmeposition (D) der Endfertigungsstation (17);
wobei die Schritte b1), b2) und von b5) bis b8) zyklisch wiederholt werden;
wobei die Schritte b1), b2) und b5) zumindest teilweise gleichzeitig ausgeführt werden; und
wobei die Schritte b6) und b8) zumindest teilweise gleichzeitig ausgeführt werden.

3. Verfahren nach einem der Ansprüche 1 oder 2, wobei der Schritt b1) den folgenden Schritt umfasst:
i) Anbringen, an einer radial äußeren Position in Bezug auf die erste Hilfstrommel (19), eines streifenförmigen Elements (23) aus rohem Elastomermaterial, das zumindest einen Verstärkungsdraht umfasst, um axial aneinandergrenzende Wicklungen zu bilden, um die Gürtellage (12) mit Verstärkungsdrähten zu erhalten, die im Wesentlichen parallel zu der Umfangsrichtung der Hülse sind.

4. Verfahren nach einem der Ansprüche 1 oder 2, wobei der Schritt b2) oder jeweils die Schritte b2) und b5) ausgeführt werden, indem die durchgehenden länglichen Elemente (27 , 28, 42) von jeweiligen Anlieferelementen (25, 26, 41) angeliefert werden, die an der zumindest einen zweiten (B), oder an der zweiten (B) und an der zumindest einen dritten (C) Arbeitsposition jeweils nahe der zweiten (20), oder der zweiten (20) und der zumindest einen dritten (40) Hilfstrommel angeordnet sind, gleichzeitig mit dem Aufwickeln der durchgehenden länglichen Elemente (27, 28, 41) auf den Trommeln (20, 40).

5. Verfahren nach Anspruch 1, wobei der Schritt b) des Weiteren den folgenden Schritt umfasst:
b9) Anbringen, in Übereinstimmung mit einem jeweils vorbestimmten Pfad, eines weiteren durchgehenden länglichen Elements aus rohem Elastomermaterial an der Aufnahmeposition (D) an einer radial äußeren Position in Bezug auf die zweite Gürtelstruktur (4) umfasst.

6. Verfahren nach Anspruch 2, wobei der Schritt b) des Weiteren den folgenden Schritt umfasst:
b10) Anbringen, in Übereinstimmung mit einem jeweils vorbestimmten Pfad, eines weiteren durchgehenden länglichen Elements aus rohem Elastomermaterial an der Aufnahmeposition (D) an einer radial äußeren Position in Bezug auf die dritte Gürtelstruktur (4) umfasst.

7. Verfahren nach Anspruch 4, wobei der Schritt b2) erfolgt, indem gleichzeitig mit der Anbringung des zumindest einen durchgehenden länglichen Elements (27, 28, 42) die folgenden Schritte ausgeführt werden:
d) Versetzen der zweiten Hilfstrommel (20), die die zweite Gürtelstruktur (4) trägt, in eine Drehbewegung um eine geometrische Achse derselben, um das zumindest eine durchgehende längliche Element (27, 28, 42) an einer radial äußeren Position in Bezug auf die zweite Gürtelstruktur (4) über den Umfang zu verteilen;
e) Ausführen von gesteuerten relativen Verschiebungen zwischen der zweiten Hilfstrommel (20) und den Anlieferelementen (25, 26, 41), um mit dem zumindest einen durchgehenden länglichen Element (27, 28, 42) eine Vielzahl von Wicklungen zu bilden, die in einer Beziehung Seite an Seite zueinander angeordnet sind, um den zumindest einen Abschnitt des Laufflächenrings (5) zu definieren.

8. Verfahren nach Anspruch 4, wobei der Schritt b5) erfolgt, indem gleichzeitig mit der Anbringung des zumindest einen durchgehenden länglichen Elements die folgenden Schritte ausgeführt werden:
d') Versetzen der zumindest dritten Hilfstrommel (40), die die dritte Gürtelstruktur (4) trägt, in eine Drehbewegung um eine geometrische Achse derselben, um das zumindest eine durchgehende längliche Element an einer radial äußeren Position in Bezug auf die dritte Gürtelstruktur (4) über den Umfang zu verteilen;
e') Ausführen von gesteuerten relativen Verschiebungen zwischen der zumindest einen dritten Hilfstrommel (20) und dem Anlieferelement, um mit dem zumindest einen durchgehenden länglichen Element eine Vielzahl von Wicklungen zu bilden, die in einer Beziehung Seite an Seite zueinander angeordnet sind, um zumindest einen radial äußeren Abschnitt des Laufflächenrings (5) zu definieren.

9. Verfahren nach Anspruch 7, wobei die Verschiebungen ausgeführt werden, indem die zweite Hilfstrommel (20) in Bezug auf das Anlieferelement (25, 26, 41) bewegt wird.

10. Verfahren nach Anspruch 8, wobei die Verschiebungen ausgeführt werden, indem die dritte Hilfstrommel (40) in Bezug auf das Anlieferelement (25, 26, 41) bewegt wird.

11. Verfahren nach einem der Ansprüche 7 oder 8, wobei die Schritte d), e), d') und e') durch eine Verschiebevorrichtung (18) ausgeführt werden, die auf die zweite (20) oder jeweils auf die zweite (20) und die zumindest eine dritte (40) Hilfstrommel wirkt.

12. Verfahren nach einem der Ansprüche 1 oder 2, wobei die Arbeitspositionen (A, B, C) der Endfertigungsstation (17) winkelmäßig voneinander versetzt sind.

13. Verfahren nach einem der Ansprüche 11 oder 12, wobei die Hilfstrommeln (19, 20, 40) durch eine im Wesentlichen rondellartige Verschiebevorrichtung (18) an Positionen getragen werden, die winkelmäßig voneinander versetzt sind, und wobei die Schritte b3) und b4) oder von b6) bis b8) ausgeführt werden, indem die Verschiebevorrichtung (18) um eine im Wesentlichen vertikale Drehachse (Y-Y) gedreht wird.

14. Verfahren nach Anspruch 13, wobei zumindest eine der Hilfstrommeln (19, 20, 40) verschiebbar durch die Verschiebevorrichtung (18) getragen wird, und wobei das Verfahren den weiteren Schritt des Versetzens der zumindest einen Hilfstrommel (19, 20, 40) zu der Drehachse (Y-Y) der Verschiebevorrichtung (18) hin umfasst, bevor der Schritt des Drehens der Vorrichtung (18) ausgeführt wird.

15. Verfahren nach einem der Ansprüche 1 oder 2, wobei die Aufnahmeposition (D) der zylindrischen Hülse im Wesentlichen mit der ersten Arbeitsposition (A) zusammenfällt.

16. Verfahren nach Anspruch 4, wobei die Anlieferung zumindest eines der durchgehenden länglichen Elemente (27, 28) ausgeführt wird, indem zumindest ein halbfertiges Produkt aus rohem Elastomermaterial in Form eines durchgehenden Streifens mittels zumindest eines der Anlieferelemente (25, 26) angeliefert wird.

17. Anlage (1) zur Herstellung von Reifen für Fahrzeugräder, die Folgendes umfasst:
a) eine Fertigungsstation (14) zur Fertigung einer im Wesentlichen zylindrischen Karkassenstruktur (3), umfassend zumindest eine Karkassenlage (10), die operativ ringförmigen Verankerungsstrukturen (7) zugeordnet ist, die axial voneinander beabstandet sind;
b) eine Endfertigungsstation (17) zur Herstellung einer im Wesentlichen zylindrischen Hülse umfassend einen Laufflächenring (5), der in einer radial äußeren Position in Bezug auf eine Gürtelstruktur (4) aufgebracht ist, die zumindest eine Gürtellage (12) mit Verstärkungsdrähten umfasst, die im Wesentlichen parallel zu der Umfangsrichtung der Hülse sind, wobei die Endfertigungsstation (17) umfasst:
b1) eine erste Hilfstrommel (19);
b2) zumindest eine zweite Hilfstrommel (20);
b3) eine Verschiebevorrichtung (18), die dazu geeignet ist, die Hilfstrommeln (19, 20) zu tragen, und die Hilfstrommeln (19, 20) an einer ersten Arbeitsposition (A) zu positionieren, an der die Gürtelstruktur (4) zusammengebaut wird, und an zumindest einer Arbeitsposition (B), an der der Laufflächenring (5) angebracht wird, sowie an einer Aufnahmeposition (D) der im Wesentlichen zylindrischen Hülse; wobei die erste (A) und die zumindest eine zweite (B) Arbeitsposition in unterschiedlichen Zonen der Endfertigungsstation (17) definiert sind;
b4) zumindest eine Anliefervorrichtung (22) für ein streifenförmiges Element (23) aus rohem Elastomermaterial, das zumindest einen Verstärkungsdraht umfasst, wobei die Anliefervorrichtung an der ersten Arbeitsposition (A) angeordnet ist, um operativ mit einer der Hilfstrommeln (19, 20) zusammenzuwirken;
b5) zumindest eine Anliefervorrichtung (25, 26) für ein durchgehendes längliches Element (23) aus rohem Elastomermaterial, wobei die Anliefervorrichtung an der zumindest einen zweiten Arbeitsposition (B) angeordnet ist, um operativ mit einer der Hilfstrommeln (19, 20) zusammenzuwirken;
wobei die erste (19) und zumindest eine zweite (20) Hilfstrommel verschiebbar von der Verschiebevorrichtung (18) getragen werden;
c) zumindest eine Transfereinrichtung (36) für die im Wesentlichen zylindrische Hülse, die in der Endfertigungsstation (17) hergestellt wurde, wobei die Transfereinrichtung dazu geeignet ist, operativ mit einer der Hilfstrommeln (19, 20) an der Aufnahmeposition (D) zusammenzuwirken, um die im Wesentlichen zylindrische Hülse an eine radial äußere Position in Bezug auf eine Karkassenstruktur (3) zu übertragen, die in der Fertigungsstation (14) gefertigt wurde.

18. Anlage (1) nach Anspruch 17, des Weiteren umfassend:
b6) zumindest eine dritte Hilfstrommel (40), die von der Verschiebevorrichtung (18) getragen wird;
b7) zumindest ein zweites Anlieferelement (41) für ein durchgehendes längliches Element (42) aus rohem Elastomermaterial, wobei das Anlieferelement an zumindest einer dritten Arbeitsposition (C) angeordnet ist, um operativ mit einer der Hilfstrommeln (19, 20, 40) zusammenzuwirken.

19. Anlage (1) nach einem der Ansprüche 17 oder 18, wobei die Verschiebevorrichtung (18) zumindest eine Trommeldrehungseinheit (31, 32, 44) umfasst, die dazu geeignet ist, die Hilfstrommeln (19, 20, 40) um deren geometrische Achsen zu drehen.

20. Anlage (1) nach Anspruch 18, wobei die zumindest eine dritte Hilfstrommel (40) verschiebbar von der Verschiebevorrichtung (18) getragen wird.

21. Anlage (1) nach einem der Ansprüche 17 oder 18, wobei die Verschiebevorrichtung (18) zumindest eine Trommelversetzungseinheit (33, 34, 45) umfasst, die dazu geeignet ist, gesteuerte axiale Bewegungen der Hilfstrommeln (19, 20, 40) an den Arbeitspositionen (A, B, C) oder an der Aufnahmeposition (D) auszuführen.

22. Anlage (1) nach einem der Ansprüche 17 oder 18, wobei die Verschiebevorrichtung (18) im Wesentlichen rondellartig ist, und dazu geeignet ist, die Hilfstrommeln (19, 20, 40) an winkelmäßig voneinander versetzten Positionen zu tragen.

23. Anlage (1) nach Anspruch 22, des Weiteren umfassend zumindest eine Antriebseinheit (35), die dazu geeignet ist, die Verschiebevorrichtung (18) um eine im Wesentlichen vertikale Drehachse (Y-Y) zu drehen.

24. Anlage (1) nach den Ansprüchen 21 und 22, wobei die Trommelversetzungseinheit (33, 34, 35) der Verschiebevorrichtung (18) die Hilfstrommeln (19, 20, 40) zwischen den Arbeitspositionen (A, B, C) oder der Aufnahmeposition (D) und einer Bereitschaftsposition versetzt, die zwischen den Arbeitspositionen (A, B, C), oder der Aufnahmeposition (D), und einer Drehachse (Y-Y) der Verschiebevorrichtung (18) definiert ist.

25. Anlage zur Herstellung von Reifen für Fahrzeugräder, umfassend eine Fertigungsanlage (1) nach einem der Ansprüche 17 bis 24 und zumindest eine Vulkanisierstation zum Vulkanisieren der Reifen, die in der Fertigungsanlage (1) hergestellt werden.

## Revendications

1. Procédé de fabrication de pneus pour roues de véhicule, comprenant les étapes qui consistent :
a) à construire, dans un poste de construction (14), une structure de carcasse essentiellement cylindrique (3) comprenant au moins un pli de carcasse (10) associé de manière fonctionnelle à des structures d'ancrage annulaires (7) espacées axialement l'une de l'autre ;
b) à fabriquer, dans un poste de finition (17), un manchon essentiellement cylindrique comprenant une bande de roulement (5) appliquée à une position radialement externe par rapport à une structure de ceinture (4) comprenant au moins une couche de ceinture (12) comportant des câblés de renforcement essentiellement parallèles à une direction de développement circonférentiel du manchon, ledit poste de finition (17) comprenant un appareil de déplacement (18) adapté pour supporter un premier tambour auxiliaire (19) et un deuxième tambour auxiliaire (20) et pour positionner lesdits tambours auxiliaires (19, 20) à une pluralité de positions de travail auxquelles les étapes de fonctionnement nécessaires pour fabriquer le manchon essentiellement cylindrique sont réalisées, ladite étape b) comprenant les étapes qui consistent :
b1) à assembler une première structure de ceinture (4) à une première position de travail (A) sur ledit premier tambour auxiliaire (19) du poste de finition (17) ;
b2) à appliquer une bande de roulement (5) à au moins une deuxième position de travail (B) à une position radialement externe par rapport à une deuxième structure de ceinture (4) préalablement assemblée sur ledit deuxième tambour auxiliaire (20) du poste de finition (17), ladite étape d'application étant réalisée en déposant, suivant une trajectoire prédéterminée, au moins un élément continu allongé (27, 28) de matériau élastomère vert à une position radialement externe par rapport à ladite deuxième structure de ceinture (4) ;
b3) à positionner le premier tambour auxiliaire (19) supportant la première structure de ceinture (4) à ladite au moins une deuxième position de travail (B) ;
b4) à positionner ledit deuxième tambour auxiliaire (20) supportant le manchon essentiellement cylindrique ainsi obtenu à une position d'enlèvement (D) du poste de finition (17) ;
c) à transférer ledit manchon essentiellement cylindrique de ladite position d'enlèvement du poste de finition (17) à une position radialement externe par rapport à une structure de carcasse (3) construite dans le poste de construction (14) pendant ce temps ;
dans lequel lesdits premier (19) et deuxième (20) tambours auxiliaires sont supportés en coulissement par l'appareil de déplacement (18) ;
dans lequel lesdites étapes allant de b1) à b4) sont répétées de manière cyclique ;
dans lequel les étapes b1) et b2) sont réalisées au moins partiellement simultanément ; et
dans lequel les étapes b3) et b4) sont réalisées au moins partiellement simultanément.

2. Procédé selon la revendication 1, dans lequel ladite étape b) de fabrication du manchon essentiellement cylindrique est réalisée au moyen des étapes qui consistent :
b1) à assembler à une première position de travail (A) une première structure de ceinture (4) sur ledit premier tambour auxiliaire (19) du poste de finition (17) ;
b2) à appliquer à une deuxième position de travail (B) au moins une première partie de la bande de roulement (5) à une position radialement externe par rapport à une deuxième structure de ceinture (4) préalablement assemblée sur ledit deuxième tambour auxiliaire (20) du poste de finition (17) ; ladite étape d'application étant réalisée en déposant, suivant une trajectoire prédéterminée, au moins un élément continu allongé (27, 28) de matériau élastomère vert à une position radialement externe par rapport à ladite deuxième structure de ceinture (4) ;
b5) à appliquer à au moins une troisième position de travail (C) au moins une deuxième partie de la bande de roulement (5) à une position radialement externe par rapport à une troisième structure de ceinture (4) assemblée sur au moins un troisième tambour auxiliaire (40) du poste de finition (17) ; ladite étape d'application étant réalisée en déposant, suivant une trajectoire prédéterminée, au moins un élément continu allongé (42) de matériau élastomère vert à une position radialement externe par rapport à ladite troisième structure de ceinture (4) ;
b6) à positionner le premier tambour auxiliaire (19) supportant la première structure de ceinture (4) à ladite deuxième position de travail (B) ;
b7) à positionner le deuxième tambour auxiliaire (20) supportant la deuxième structure de ceinture (4) et ladite au moins une partie de la bande de roulement (5) à ladite troisième position de travail (C) ;
b8) à positionner ledit au moins un troisième tambour auxiliaire (40) supportant le manchon essentiellement cylindrique ainsi obtenu à une position d'enlèvement (D) du poste de finition (17) ;
dans lequel lesdites étapes b1), b2) et les étapes allant de b5) à b8) sont répétées de manière cyclique ;
dans lequel les étapes b1), b2) et b5) sont réalisées au moins partiellement simultanément ; et
dans lequel les étapes allant de b6) à b8) sont réalisées au moins partiellement simultanément.

3. Procédé selon l'une quelconque des revendications 1 ou 2, dans lequel ladite étape b1) comprend l'étape qui consiste
i) à appliquer à une position radialement externe par rapport au premier tambour auxiliaire (19) un élément en forme de bande (23) de matériau élastomère vert comportant au moins un câblé de renforcement pour former des spires circonférentielles axialement contiguës, de manière à obtenir ladite couche de ceinture (12) comportant des câblés de renforcement essentiellement parallèles à la direction de développement circonférentiel du manchon.

4. Procédé selon l'une quelconque des revendications 1 ou 2, dans lequel ladite étape b2) ou, respectivement, lesdites étapes b2) et b5), est/sont réalisée(s) en distribuant lesdits éléments continus allongés (27, 28, 42) à partir d'organes de distribution respectifs (25, 26, 41) agencés à ladite au moins une deuxième position de travail (B) ou à ladite deuxième position de travail (B) et à ladite au moins une troisième position de travail (C) à proximité dudit deuxième tambour auxiliaire (20) ou dudit deuxième tambour auxiliaire (20) et dudit au moins un troisième tambour auxiliaire (40) respectivement, simultanément avec l'enroulement des éléments continus allongés (27, 28, 41) sur lesdits tambours (20, 40).

5. Procédé selon la revendication 1, dans lequel ladite étape b) comprend en outre l'étape qui consiste
b9) à appliquer suivant une trajectoire prédéterminée respective un élément supplémentaire continu allongé de matériau élastomère vert à ladite position d'enlèvement (D) à une position radialement externe par rapport à ladite deuxième structure de ceinture (4).

6. Procédé selon la revendication 2, dans lequel ladite étape b) comprend en outre l'étape qui consiste
b10) à appliquer, suivant une trajectoire prédéterminée respective, un élément supplémentaire continu allongé de matériau élastomère vert à ladite position d'enlèvement (D) à une position radialement externe par rapport à ladite troisième structure de ceinture (4).

7. Procédé selon la revendication 4, dans lequel ladite étape b2) est effectuée en réalisant, simultanément avec l'application dudit au moins un élément continu allongé (27, 28, 42), les étapes qui consistent :
d) à conférer audit deuxième tambour auxiliaire (20) portant la deuxième structure de ceinture (4) un mouvement de rotation autour d'un axe géométrique de celui-ci, de manière à distribuer de manière circonférentielle ledit au moins un élément continu allongé (27, 28, 42) à une position radialement externe par rapport à la deuxième structure de ceinture (4) ;
e) à réaliser des déplacements relatifs commandés entre ledit deuxième tambour auxiliaire (20) et l'organe de distribution (25, 26, 41) pour former avec ledit au moins un élément continu allongé (27, 28, 42) une pluralité de spires agencées selon une relation réciproque côte à côte pour définir ladite au moins une partie de la bande de roulement (5).

8. Procédé selon la revendication 4, dans lequel ladite étape b5) est effectuée en réalisant, simultanément avec l'application dudit au moins un élément continu allongé les étapes qui consistent :
d') à conférer audit au moins un troisième tambour auxiliaire (40) portant la troisième structure de ceinture (4) un mouvement de rotation autour d'un axe géométrique de celui-ci, de manière à distribuer de manière circonférentielle ledit au moins un élément continu allongé à une position radialement externe par rapport à la troisième structure de ceinture (4) ;
e') à réaliser des déplacements relatifs commandés entre ledit au moins un troisième tambour auxiliaire (40) et l'organe de distribution pour former avec ledit au moins un élément continu allongé une pluralité de spires agencées selon une relation réciproque côte à côte pour définir au moins une partie radialement externe de la bande de roulement (5).

9. Procédé selon la revendication 7, dans lequel lesdits déplacements sont réalisés en déplaçant le deuxième tambour auxiliaire (20) par rapport audit organe de distribution (25, 26, 41).

10. Procédé selon la revendication 8, dans lequel lesdits déplacements sont réalisés en déplaçant le troisième tambour auxiliaire (40) par rapport audit organe de distribution (25, 26, 41).

11. Procédé selon l'une quelconque des revendications 7 ou 8, dans lequel lesdites étapes d), e), d') et e') sont réalisées par un appareil de déplacement (18) actif sur ledit deuxième tambour auxiliaire (20) ou, respectivement, sur ledit deuxième tambour auxiliaire (20) et ledit au moins un troisième tambour auxiliaire (40).

12. Procédé selon l'une quelconque des revendications 1 ou 2, dans lequel lesdites positions de travail (A, B, C) du poste de finition (17) sont décalées angulairement les unes par rapport aux autres.

13. Procédé selon l'une quelconque des revendications 11 ou 12, dans lequel lesdits tambours auxiliaires (19, 20, 40) sont supportés par un appareil de déplacement (18) essentiellement en forme de tourelle à des positions décalées angulairement les unes par rapport aux autres et dans lequel lesdites étapes b3) et b4) ou les étapes allant de b6) à b8) sont réalisées en faisant tourner ledit appareil de déplacement (18) autour d'un axe de rotation essentiellement vertical (Y-Y).

14. Procédé selon la revendication 13, dans lequel au moins l'un desdits tambours auxiliaires (19, 20, 40) est supporté en coulissement par ledit appareil de déplacement (18) et dans lequel le procédé comprend l'étape supplémentaire qui consiste à effectuer une translation dudit au moins un tambour auxiliaire (19, 20, 40) vers l'axe de rotation (Y-Y) de l'appareil de déplacement (18) avant de réaliser ladite étape de rotation dudit appareil (18).

15. Procédé selon l'une quelconque des revendications 1 ou 2, dans lequel la position d'enlèvement (D) du manchon cylindrique coïncide essentiellement avec ladite première position de travail (A).

16. Procédé selon la revendication 4, dans lequel la distribution d'au moins l'un desdits éléments continus allongés (27, 28) est réalisée en distribuant au moins un produit semi-fini de matériau élastomère vert sous forme d'une bande continue au moyen d'au moins l'un desdits organes de distribution (25, 26).

17. Installation (1) pour la fabrication de pneus pour roues de véhicule comprenant :
a) un poste de construction (14) destiné à construire une structure de carcasse essentiellement cylindrique (3) comprenant au moins un pli de carcasse (10) associé de manière fonctionnelle à des structures d'ancrage annulaires (7) espacées axialement l'une de l'autre ;
b) un poste de finition (17) destiné à fabriquer un manchon essentiellement cylindrique comprenant une bande de roulement (5) appliquée à une position radialement externe par rapport à une structure de ceinture (4) comprenant au moins une couche de ceinture (12) comportant des câblés de renforcement essentiellement parallèles à la direction de développement circonférentiel du manchon, ledit poste de finition (17), comprenant :
b1) un premier tambour auxiliaire (19) ;
b2) au moins un deuxième tambour auxiliaire (20) ;
b3) un appareil de déplacement (18) adapté pour supporter lesdits tambours auxiliaires (19, 20) et pour positionner lesdits tambours auxiliaires (19, 20) à une première position de travail (A) où ladite structure de ceinture (4) est assemblée, à au moins une deuxième position de travail (B), où ladite bande de roulement (5) est appliquée et à une position d'enlèvement (D) dudit manchon essentiellement cylindrique ; ladite première position de travail (A) et ladite au moins une deuxième position de travail (B) étant définies dans différentes zones du poste de finition (17) ;
b4) au moins un dispositif de distribution (22) d'un élément en forme de bande (23) de matériau élastomère vert comportant au moins un câblé de renforcement, agencé à ladite première position de travail (A) pour interagir de manière fonctionnelle avec l'un desdits tambours auxiliaires (19, 20) ;
b5) au moins un organe de distribution (25, 26) d'un élément continu allongé (27, 28) de matériau élastomère vert agencé à ladite au moins une deuxième position de travail (B) pour interagir de manière fonctionnelle avec l'un desdits tambours auxiliaires (19, 20) ;
ledit premier tambour auxiliaire (19), et au moins un deuxième tambour auxiliaire (20) étant supportés en coulissement par l'appareil de déplacement (18) ;
c) au moins un dispositif de transfert (36) du manchon essentiellement cylindrique fabriqué dans le poste de finition (17), adapté pour interagir de manière fonctionnelle avec l'un desdits tambours auxiliaires (19, 20) à ladite position d'enlèvement (D) pour transférer ledit manchon essentiellement cylindrique à une position radialement externe par rapport à une structure de carcasse (3) construite dans le poste de construction (14).

18. Installation (1) selon la revendication 17, comprenant en outre :
b6) au moins un troisième tambour auxiliaire (40) supporté par ledit appareil de déplacement (18) ;
b7) au moins un deuxième organe de distribution (41) d'un élément continu allongé (42) de matériau élastomère vert agencé à au moins une troisième position de travail (C) pour interagir de manière fonctionnelle avec l'un desdits tambours auxiliaires (19, 20, 40).

19. Installation (1) selon l'une quelconque des revendications 17 ou 18, dans laquelle ledit appareil de déplacement (18) comprend au moins une unité de rotation de tambour (31, 32, 44) adaptée pour faire tourner les tambours auxiliaires (19, 20, 40) autour de leurs axes géométriques.

20. Installation (1) selon la revendication 18, dans laquelle ledit au moins un troisième tambour auxiliaire (40) est supporté en coulissement par ledit appareil de déplacement (18).

21. Installation (1) selon l'une quelconque des revendications 17 ou 18, dans laquelle ledit appareil de déplacement (18) comprend au moins une unité de translation de tambour (33, 34, 45) adaptée pour réaliser des mouvements axiaux commandés desdits tambours auxiliaires (19, 20, 40) auxdites positions de travail (A, B, C) ou à ladite position d'enlèvement (D).

22. Installation (1) selon l'une quelconque des revendications 17 ou 18, dans laquelle ledit appareil de déplacement (18) est essentiellement en forme de tourelle et est adapté pour supporter lesdits tambours auxiliaires (19, 20, 40) à des positions angulairement décalées les unes par rapport aux autres.

23. Installation (1) selon la revendication 22, comprenant en outre au moins une unité d'entraînement (35) adaptée pour faire tourner ledit appareil de déplacement (18) autour d'un axe de rotation essentiellement vertical (Y-Y).

24. Installation (1) selon les revendications 21 et 22, dans laquelle ladite unité de translation de tambour (33, 34, 35) de l'appareil de déplacement (18) effectue une translation desdits tambours auxiliaires (19, 20, 40) entre lesdites positions de travail (A, B, C) ou ladite position d'enlèvement (D) et une position d'attente définie entre lesdites positions de travail (A, B, C) ou la position d'enlèvement (D) et un axe de rotation (Y-Y) de l'appareil de déplacement (18).

25. Installation destinée à fabriquer des pneus pour roues de véhicule, comprenant une installation de fabrication (1) selon l'une quelconque des revendications 17 à 24 et au moins un poste de vulcanisation destiné à vulcaniser les pneus fabriqués dans ladite installation de fabrication (1).
